(19) Europäisches Patentamt / European Patent Office / Office européen des brevets

(11) **EP 3 370 913 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **16793748.1**

(22) Anmeldetag: **31.10.2016**

(51) Int Cl.:
*B23K 26/00* (2014.01)   *B23K 26/06* (2014.01)
*B23K 26/073* (2006.01)   *B23K 26/08* (2014.01)
*B23K 26/26* (2014.01)   *B23K 35/02* (2006.01)
*B23K 26/0622* (2014.01)   *B23K 26/22* (2006.01)
*B23K 26/24* (2014.01)   *B23K 26/324* (2014.01)

(86) Internationale Anmeldenummer:
**PCT/EP2016/001810**

(87) Internationale Veröffentlichungsnummer:
**WO 2017/076494 (11.05.2017 Gazette 2017/19)**

(54) **VERFAHREN ZUM FÜGEN VON ZWEI BAUTEILEN IM BEREICH EINER FÜGEZONE MITTELS MINDESTENS EINEM LASERSTRAHL SOWIE VERFAHREN ZUM ERZEUGEN EINER DURCHGEHENDEN FÜGENAHT**

METHOD FOR JOINING TWO COMPONENTS IN THE REGION OF A JOINT ZONE BY MEANS OF AT LEAST ONE LASER BEAM, AND METHOD FOR GENERATING A CONTINUOUS JOINT SEAM

PROCÉDÉ D'ASSEMBLAGE DE DEUX ÉLÉMENTS STRUCTURAUX DANS LA RÉGION D'UNE ZONE D'ASSEMBLAGE AU MOYEN D'AU MOINS UN FAISCEAU LASER ET PROCÉDÉ DE PRODUCTION D'UN JOINT D'ASSEMBLAGE CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2015 DE 102015014060**

(43) Veröffentlichungstag der Anmeldung:
**12.09.2018 Patentblatt 2018/37**

(73) Patentinhaber: **Fraunhofer Gesellschaft zur Förderung der angewandten Forschung E.V.
80686 München (DE)**

(72) Erfinder:
• **BRITTEN, Simon**
  **53179 Bonn (DE)**
• **MEHLMANN, Benjamin**
  **81827 München (DE)**
• **OLOWINSKY, Alexander**
  **52066 Aachen (DE)**
• **GILLNER, Arnold**
  **52159 Roetgen (DE)**

(74) Vertreter: **Grimm, Ekkehard
  Edith-Stein-Strasse 22
  63075 Offenbach/Main (DE)**

(56) Entgegenhaltungen:
**EP-A1- 0 486 817    EP-A1- 1 349 696**

• **DURANDUS K. DIJKEN ET AL: "Laser penetration spike welding: a welding tool enabling novel process and design opportunities", OPTICAL SENSING II, Bd. 4637, 17. Juni 2002 (2002-06-17), Seite 555, XP055334955, 1000 20th St. Bellingham WA 98225-6705 USA ISSN: 0277-786X, DOI: 10.1117/12.470670 ISBN: 978-1-62841-971-9**

**Beschreibung**

Die vorliegende Erfindung betrifft ein Verfahren zum Fügen von zwei Bauteilen im Bereich einer Fügezone mittels mindestens eines Laserstrahls sowie ein Verfahren zum Erzeugen einer durchgehenden Fügenaht mit den Merkmalen des Oberbegriffs des Anspruchs 1.

Ein solches Verfahren ist aus der EP 1 349 696 A1 (WO 02/051580 A1) bekannt.

Es sind verschiedene Verfahren bekannt, die zum Fügen von zwei Bauteilen angewandt werden.

Soweit in den vorliegenden Unterlagen der Ausdruck "Fügen" erwähnt ist, so bezieht er sich auf das Verbinden von zwei Bauteilen im Bereich einer Fügezone, im Bereich derer die beiden Bauteile durch Verschmelzung miteinander verbunden werden.

Im Stand der Technik werden unterschiedliche Verfahren zum Fügen von Bauteilen angewandt.

Bei dem konventionellen Laserstrahlschweißen werden beide Fügepartner in einen möglichst engen Kontakt zueinander gebracht. Im Idealfall besteht zwischen beiden Bauteilen kein Spalt. Häufig stellt sich jedoch aufgrund von Bauteilungenauigkeiten ein Spalt ein, der durch den Schweißvorgang überbrückt werden muss. Beide Fügepartner werden beim konventionellen Laserstrahlschweißen durch den Laserstrahl lokal aufgeschmolzen, indem der erste Fügepartner durch den Laserstrahl derart erwärmt und lokal aufgeschmolzen wird, dass durch Wärmeleitung der zweite Fügepartner gleichzeitig aufgeschmolzen wird. Beim Tiefschweißen erfolgt das Aufschmelzen des zweiten Bauteils dadurch, dass der Laserstrahl durch eine Dampfkapillare im ersten Bauteil dringt und so die Laserstrahlung direkt auf das zweite Bauteil auftrifft. In jedem Fall wird bei dem konventionellen Laserstrahlschweißen die Größe der Schmelzzone in beiden Bauteilen durch die kontinuierliche Zufuhr von Laserenergie bestimmt.

Bei dem Laser-Spike-Welding werden dünne Metallbleche in einer Überlappstoßanordnung miteinander verschweißt. Das benötigte Material zur Erzeugung der Schweißverbindung entstammt ausschließlich dem oberen Fügepartner, so dass kein Zusatzwerkstoff erforderlich ist. Das Verfahren ermöglicht die Spaltüberbrückung zwischen den Fügepartnern für Distanzen bis zu 100 % der Materialstärke des oberen Fügepartners. Mit diesem Verfahren sollen Spritzer und Verunreinigungen bei dem Schweißvorgang von Stahlkonstruktionen bei gleichzeitiger Erhöhung der Spalttoleranz zwischen den Fügepartnern vermieden werden. Der Prozess läuft in zwei Phasen ab. Die Vorwärmphase dient dazu, das Material im oberen Fügepartner aufzuschmelzen. Um eine stabile Schmelzlinse zu erhalten, wird die Pulsleistung so gewählt, dass die Prozessschwelle zum Tiefschweißen nicht überschritten wird. Auf diese Weise wird erreicht, dass das Material bis zur Unterseite des oberen Fügepartners durchschmilzt und die in der Spikephase zusätzlich induzierte Energie vollständig für die Materialauslenkung verfügbar ist. Die Spikephase wird durch eine an die Vorwärmphase anschließende, zeitlich begrenzte Leistungserhöhung initiiert und dient der Auslenkung des geschmolzenen Materials in Richtung des unteren Fügepartners. Die Erhöhung der Temperatur bis zum Verdampfen wird durch Leistungserhöhung innerhalb eines Laserpulses bei gleichbleibendem Fokusdurchmesser durchgeführt. Die Siedetemperatur auf der Schmelzbadoberfläche wird überschritten und Material verdampft. Dabei erzeugt der Rückstoß der aus der Schmelze heraus beschleunigten Dampfpartikel einen Druck auf die Schmelzbadoberfläche.

Ein weiteres bekanntes Verfahren ist das Laser Droplet Welding (LDW), bei dem es sich um ein kontaktloses Schweißverfahren unter Verwendung eines Zusatzwerkstoffs, der dem Prozess in Form eines Drahts zugeführt wird, handelt. Dieses Verfahren dient zum Fügen von elektronischen Komponenten mittels Lotkugeln, die von dem Draht abgeschmolzen werden (Kehlnaht). Die entsprechende Vorrichtung besteht aus einem System zur automatisierten Drahtzuführung und einem Laser-System zur Bereitstellung der Prozessstrahlung. Der Schweißdraht wird vertikal zugeführt, um ein Abtropfen der Schmelze zu erleichtern. Um eine homogene Erwärmung des Schweißdrahts zu gewährleisten, erfolgt der Energieeintrag durch drei, um 120° versetzte, auf den Draht fokussierte Laserstrahlen. Eine alternative Anordnung mit Laserstrahl von oben und seitlicher Drahtzuführung ermöglicht die Vorwärmung des Substrats mittels defokussierter Laserstrahlung.

Eine Abwandlung des vorstehend beschriebenen LDW-Verfahrens stellt das sogenannte Laser Droplet Brazing dar, bei dem eine metallische Preform in einer Düse vorpositioniert wird, mit einem Laserstrahl aufgeschmolzen wird und mittels Stickstoff-Gasdruck zum Werkstück hin ausgeblasen wird.

Ein weiteres bekanntes Verfahren, das Laser Impact Welding (LIW), dient zum Fügen von festen metallischen Bauteilen in Blechform durch laserinduzierte Propulsion des oberen Bauteils auf den unteren Fügepartner. Dieses Schockschweißen nutzt den Effekt, dass durch Einbringung eines großen Druckes auf zwei saubere Oberflächen eine feste Verbindung entsteht; nach gängiger Hypothese ist dies eine Folge einer Diffusion und Rekristallisation über die Stoffgrenzen der Fügepartner hinweg. Der Schmelzpunkt der beiden Materialien spielt keine Rolle.

Eine Art des Schockschweißens ist das Prallschweißen, bei dem ein leichter Fügepartner eine hohe Beschleunigung erfährt und mit einer hohen Geschwindigkeit auf sein Pendant prallt. Der dabei entstehende Druck reicht aus, um beide Fügepartner zu verschweißen. Wird zur Beschleunigung des leichteren Fügepartners ein Plasma mit Hilfe von gebündelten, elektromagnetischen Wellen erzeugt, wird vom Laser Impact Welding (LIW) gesprochen. Die angewandten Drücke liegen im Bereich von $10^9$ Pa.

Das Solder Jet Bumping dient zum Fügen von mikrooptischen Systemen mittels Lotkugeln (Kehlnaht) und erfolgt, ähnlich zu dem Laser Droplet Brazing, mit einer Stickstoffausblasung der Lotschmelze.

Das LIFT-Verfahren (Laser Induced Forward Transfer) nutzt Laserstrahlung, um Material von einer Spenderschicht über einen Spalt auf eine Empfängerschicht hinweg zu übertragen. Hierbei wird die Spenderschicht auf einer Trägerschicht aufgetragen, die einen hohen Transmissionsgrad für die Wellenlänge des Bearbeitungslasers aufweist. Um das Spendermaterial zu übertragen, wird der Laserstrahl durch die Trägerschicht auf die Granzfläche zur Spenderschicht fokussiert. Die durch Bestrahlung in die Spenderschicht eingetragene Energie führt zu deren Erwärmung. Dadurch beginnt das Material an dieser Stelle zu schmelzen. Die Schmelzfront breitet sich in Richtung der freien Oberfläche des Spendermaterials aus, bis der Druck an der Grenzfläche, bedingt durch Materialverdampfung, ausreicht, um das Spendermaterial von der Trägerschicht zu lösen und in Richtung der Empfängerschicht zu beschleunigen.

Die EP 1 349 696 A1 (WO 02/051580 A1) beschreibt ein Verfahren zum Verschweißen von einander überlappenden Teilen mittels wenigstens eines Laserstrahls. Das Verfahren wird in wenigstens zwei Schritten ausgeführt. In einem ersten Schritt wird wenigstens eine Schmelze in wenigstens einem Teil mit einer ersten Laserintensität gebildet, welche so ausgewählt wird, dass keine oder eine sehr geringe Verdampfung auftritt. In einem weiteren Schritt wird die wenigstens eine Schmelze in Richtung eines weiteren Teils mit einer zweiten Laserintensität geschoben, die so ausgewählt ist, dass Verdampfung auftritt. Die zweite Laserintensität ist höher als die erste Laserintensität, so dass das wenigstens eine Teil und das weitere Teil miteinander verschweißt werden.

Der vorliegenden Erfindung liegt die Aufgabe zugrunde, ein Verfahren zum Fügen von dickeren metallischen Bauteilen auf ein empfindliches Bauteil mit einer metallischen Schicht, insbesondere einer dünnen Metallisierung (dünnerer unterer Fügelage), anzugeben, ohne dass Schädigungen des unteren Bauteils hervorgerufen werden. Insbesondere soll das Verfahren für das Fügen von Bauteilen mit metallischen Schichten auf sensiblen Substraten anwendbar sein. Weiterhin soll ein Verfahren angegeben werden, mit dem das Erzeugen einer Fügenaht mit den entsprechenden Vorteilen möglich ist.

Gelöst wird diese Aufgabe durch ein Verfahren mit den Merkmalen des Anspruchs 1 sowie ein Verfahren mit den Merkmalen des Anspruchs 10, wobei letzteres Verfahren dazu dient, eine durchgehende Fügenaht zu erzeugen. Bevorzugte Ausführungsformen des Verfahrens sind in den abhängigen Ansprüchen angegeben.

Unter sensiblen Substraten sind solche Substrate zu verstehen, die aufgrund eines hohen Temperaturgradienten und der daraus entstehenden Spannungen zur Rissbildung neigen oder die aufgrund hoher lokaler Temperaturen degradieren. Im ersten Fall können dies zum Beispiel dünne Metallfilme auf Halbleitern und Keramiken, im zweiten Fall metallische Schichten auf Kunststoffen sein.

Nach dem erfindungsgemäßen Verfahren zum Fügen von zwei Bauteilen im Bereich einer Fügezone werden unter Einsatz mindestens eines Laserstrahls die nachfolgenden Verfahrensschritte durchgeführt.

Zunächst wird ein erstes Bauteil im Bereich der Fügezone thermisch getrennt mit Abstand zu einem zweiten Bauteil positioniert, wobei, in Richtung der Dicke der Bauteile gesehen, zwischen dem ersten und dem zweiten Bauteil ein Fügespalt belassen wird. Die Breite des Fügespalts (in Richtung der Dicke der Bauteile) wird daran bemessen, dass die im ersten Bauteil erzeugte Schmelze durch einen Dampfdruck auf das zweiten Bauteil ausgelenkt wird und dieses berühren muss. Das Bewegungsvermögen und -verhalten wird dabei durch die jeweilige Dicke des Bauteils, die Temperatur und damit die Viskosität in der Schmelze und der Oberflächenspannung in der Schmelze im Vergleich zum ungeschmolzenen Zustand beeinflusst.

In einer ersten Phase wird der mindestens eine Laserstrahl, in Richtung der Dicke der Bauteile gesehen, auf das erste Bauteil auf dessen dem zweiten Bauteil abgewandten Oberfläche gerichtet. Die durch den Laserstrahl bestrahlte Oberfläche wird als Einstrahlfläche $A_L$ bezeichnet.

Soweit in den vorliegenden Unterlagen von einer Richtung des Laserstrahls gesprochen wird, so bezieht sich diese Richtung auf die Strahlrichtung, von einer Fokussieroptik kommend, auf das Bauteil.

Durch diesen Laserstrahl wird das erste Bauteil lokal, zumindest entsprechend der Größe der Fügezone, über dessen gesamte Dicke aufgeschmolzen. Wesentlich ist, dass die über den Laserstrahl in dem ersten Bauteil absorbierte Energie, bezeichnet als $Q_{L,a}$, so gewählt wird, dass die folgende Bedingung erfüllt ist:

$$Q_{L,a} = \int \dot{Q}_{L,a}\,dt = Q_{B1} + \int \dot{Q}_{kond1}\,dt + dH_{M1} + Q_{B2} + \int \dot{Q}_{kond2}\,dt + dH_{M2}$$

erfüllt ist, mit

$Q_{L,a} = \int \dot{Q}_{L,a}\,dt$          im ersten Bauteil absorbierte Energie

$Q_{B1} = \rho_1 \cdot A \cdot s_{B1} \cdot c_{p1} \cdot (T_{m1} - T_0)$          benötigte Energie zum Erzeugen einer lokalen Schmelzlinse in dem ersten Bauteil

                                    mit $\rho_1$ = Dichte des ersten Bauteils,

$A_1$ = In Richtung des Laserstrahls projizierte Fläche der Schmelzlinse
$s_{B1}$ = Dicke des ersten Bauteils,
$c_{p1}$ = Wärmekapazität des ersten Bauteils,
$T_{m1}$ = Schmelztemperatur des ersten Bauteils,
$T_0$ = Umgebungstemperatur

$\int \dot{Q}_{Kond1} dt = Q_{kond1}$    konduktive Wärmeleitungsverluste im ersten Bauteil

$dH_{M1}$    Enthalpie für einen Materialphasenwechsel im ersten Bauteil

$Q_{B2} = \rho_2 \cdot A \cdot s_{B2} \cdot c_{p2} \cdot (T_{m2} - T_0)$    benötigte Energie zum Erzeugen eines lokalen Schmelzfilms in dem zweiten Bauteil

mit $\rho_2$ = Dichte des ersten Bauteils,
$A_2$ = In Richtung des Laserstrahls projizierte Fläche des Schmelzfilms,
$s_{B2}$ = Dicke des Schmelzfilms im zweiten Bauteil,
$c_{p2}$ = Wärmekapazität des zweiten Bauteils,
$T_{m2}$ = Schmelztemperatur des zweiten Bauteils,
$T_0$ = Umgebungstemperatur

$\int \dot{Q}_{Kond2} dt = Q_{kond2}$ konduktive    Wärmeleitungsverluste im zweiten Bauteil

$dH_{M2}$ Enthalpie    für einen Materialphasenwechsel im zweiten Bauteil

Es bildet sich in dem ersten Bauteil aus dem aufgeschmolzenen Material eine Schmelzlinse aus.

Dann wird, in einer zweiten Phase, mindestens ein Druckimpuls auf die Schmelze in Richtung des zweiten Bauteils appliziert, bis sich die Schmelzlinse infolge des Druckimpulses in den Fügespalt auslenkt, den Fügespalt überbrückt und mit dem zweiten Bauteil in Kontakt tritt. Durch den Kontakt der Schmelzlinse mit dem zweiten Bauteil findet ein Energieübertrag auf das zweite Bauteil statt, und durch den Energieübertrag ergibt sich in dem zweiten Bauteil ein solcher Temperaturverlauf, dass auf der Oberseite des zweiten Bauteils dessen Schmelztemperatur erreicht wird. Ein wesentlicher Aspekt ist derjenige, dass die Wärmeeindringtiefe in das zweite Bauteil aufgrund einer Kontaktzeit, bezeichnet als $t_{Kontakt}$, so eingestellt wird, dass in einer vorgegebenen Tiefe des zweiten Bauteils eine das zweite Bauteil schädigende Schädigungstemperatur, bezeichnet als $T_{schädigung}$, nicht überschritten wird.

Die Kontaktzeit $t_{Kontakt}$ ist die Zeit zwischen einem ersten Kontakt der Schmelzlinse mit dem zweiten Bauteil und der Erstarrung des in der Schmelzlinse aufgeschmolzenen Materials.

Die Schädigungstemperatur $T_{schädigung}$ im zweiten Bauteil ist definiert als die Temperatur T in der Tiefe $z_{krit,B2}$ des zweiten Bauteils in Richtung dessen Dicke gesehen, bei der entweder eine Schädigung des unter der Metallisierung bzw. unter der metallischen Schicht des zweiten Bauteils liegenden Materials auftritt oder eine Ablösung der metallischen Schicht auf der Oberseite des zweiten Bauteils von dem darunterliegenden Material des zweiten Bauteils erfolgt.

Durch das erfindungsgemäße Verfahren wird erreicht, dass ein Fügen von dickeren metallischen Bauteilen auf empfindlichere Bauteile mit dünner Metallisierungsschicht möglich ist, ohne dass in dem zweiten Bauteil, dem unteren Bauteil, Schädigungen hervorgerufen werden. Insbesondere ist das erfindungsgemäße Verfahren bei sensiblen Substraten für das zweite Bauteil anwendbar.

Insbesondere wird das erfindungsgemäße Verfahren bei dem Fügen von einem dickeren, oberen (in Richtung der Laserstrahlung gesehen) Fügepartner auf einem dünneren unteren Fügepartner angewandt, und es erfolgt hierbei nur eine minimale Energiedeposition in dem unteren Bauteil. Das bedeutet, dass, aufgrund einer thermischen Entkopplung von oberem Bauteil und unterem Bauteil, im unteren Bauteil nur ein solcher Energieeintrag erfolgt bzw. nur eine solche Energie $Q_{L,a}$ absorbiert wird, dass eine dünne, aber ausreichende Schmelzfilmdicke im zweiten Bauteil erzeugt wird, um die beiden Bauteile stoffschlüssig zu verbinden. Wesentlich ist daher der Spalt zwischen den beiden Bauteilen, über den die thermische Entkopplung realisiert wird. Bei dem erfindungsgemäßen Verfahren erfolgt das Aufschmelzen des zweiten Bauteils primär aus der in der Schmelze des ersten Bauteils enthaltenen Energie. Die Laserstrahlleistung wird zum eigentlichen Fügezeitpunkt, der als der Zeitpunkt angesehen wird, zu dem ein Kontakt zwischen Schmelze und zweitem Bauteil erfolgt, reduziert. Von Vorteil ist auch, dass die benötigte Energie für den Fügeprozess reduziert bzw. minimiert wird. In einer Verfahrensführung wird die Steuerung des Energieeintrags in das erste Bauteil derart durchgeführt, dass der Laserstrahl zwar die Schmelzlinse erzeugt und gegebenenfalls auch den Druckimpuls auf die Schmelze ausübt, aber nicht durch die Schmelzlinse hindurchdringt. Dadurch wird garantiert, dass die Oberfläche des zweiten Bauteils nicht durch einen energetischen Eintrag des Laserstrahls belastet wird.

Es ist aber auch vorgesehen, dass der Energieeintrag in die Schmelzlinse in der zweiten Phase derart durchgeführt wird, dass der Laserstrahl durch das erste Bauteil hindurch dringt, ohne zunächst in dem zweiten Bauteil eine Schmelze zu erzeugen, oder höchstens das zweite Bauteil nur sehr geringfügig anzuschmelzen, und dass die Temperatur der den Spalt überbrückenden Schmelze nicht weiter erhöht wird. Der Druckimpuls auf die Schmelzlinse, die sich in dem ersten Bauteil ausgebildet hat, wird in der zweiten Phase durch eine Materialverdampfung ausgelöst. Aufgrund dieses Druckimpulses wird ein Transfer der nicht-ablösenden Schmelzlinse von dem ersten Bauteil in Richtung des zweiten Bauteils verursacht, der zu einem Kontakt zwischen Schmelzlinse des ersten Bauteil und der zum ersten Bauteil gerichteten Oberseite des zweiten Bauteils resultiert. Das zweite Bauteil wird dann durch die Wärmeenergie, die in der sich im Spalt befindlichen Schmelze gespeichert ist, aufgeheizt und oberflächlich angeschmolzen, so dass sich die Schmelzen beider Bauteile verbinden.

Solche Druckimpulse können durch den Laserstrahl, der die Schmelzlinse im ersten Bauteil bewirkt, erzeugt werden. Es ist aber auch vorgesehen, dass solche Druckimpulse durch ein Strahlwerkzeug, beispielsweise einen Elektronenstrahl, eine Hohlkammerentladung, einen Gasdruck bzw. Fluiddruck, einen mechanischen Impuls, ein elektrisches Feld, eine elektrostatische Anziehung, die Anwendung eines Bernoulli-Effekts, ausgeübt werden.

Es ist weiterhin vorgesehen, bestimmte Modulationstechniken einzusetzen, um eine energiearme Übertragung der Schmelze von dem ersten Bauteil über den Spalt hinweg zu dem zweiten Bauteil zu erreichen. Der Prozessablauf wird vorzugsweise so eingestellt, dass ein Durchtritt des Laserstrahls durch die Schmelzlinse vermieden oder zumindest minimiert wird.

Durch eine angepasste Modulationstechnik wird eine zeitliche und/oder örtliche Verteilung einer Verdampfung des Materials des ersten Bauteils im Bereich der Schmelzlinse erreicht, um diese gezielt über den Spalt auszulenken. Durch diese zeitliche und/oder räumliche Steuerung der Verdampfung mittels entsprechender Modulationstechniken wird die zeitliche und räumliche Verdampfung des Materials des ersten Bauteils und damit die Druckverteilung in der Schmelze gesteuert und dadurch weniger Energie benötigt und den Fügepartnern zugeführt als dies Verfahren nach dem Stand der Technik erfordern.

Im Gegensatz dazu führt eine dreidimensionale Verdampfungs- und Druckverteilung zu einer starken Lokalisierung des Verdampfungsbereichs und zu einem Durchtritt des Laserstrahls durch das erste Bauteil und/oder zu einem zusätzlichen Energieeintrag in das untere, zweite Bauteil, obwohl die Anbindung der Schmelze an das zweite Bauteil bereits erreicht ist.

Es ist vorgesehen, dass der (die) in der zweiten Phase applizierte(n) Druckimpuls(e) durch unterschiedliche Modulation der Laserstrahlung ausgelöst wird (werden).

Es ist neben einer zeitlichen Leistungsmodulation der Laserstrahlung und des Laserstrahlfokus auch eine örtliche Leistungsmodulation, eine zeitliche Fokusmodulation des Laserstrahls, oder eine Kombination aus diesen, vorgesehen.

Für eine zeitliche Temperaturmodulation an der Oberfläche des ersten Bauteils wird die durch den Laserstrahl in dem ersten Bauteil absorbierte Energie $Q_{L,a}$ in der zweiten Phase zeitlich moduliert, indem die Größe der Einstrahlfläche bei annähernd gleicher Laserleistung verkleinert oder vergrößert wird. Eine solche Verkleinerung wird so vorgenommen, dass durch Veränderung des Abstandes von Fokussierlinse und Bauteil oder durch Änderung der Laserstrahldivergenz der Strahlradius modifiziert wird.

Es ist auch vorgesehen, gleichzeitig sowohl die Einstrahlfläche der Laserstrahlung auf dem ersten Bauteil als

$$P_L = \int \frac{\dot{Q}_{L,a}}{A_s} dt \, / t_P$$

auch die eingestrahlte Laserleistung zu verändern. Hierbei ist der Zusammenhang                     zu beachten, wobei $P_L$ die Laserleistung, $A_s$ den Absorptionsgrad des ersten Bauteils für die Laserstrahlung und tp die Prozesszeit, d.h. diejenige Zeit, die die Summe aus Aufheiz- und Schmelzzeit des ersten Bauteils, die Kontakt- und Wärmeübertragungszeit auf das zweite Bauteil bildet, angeben. Aufgrund dieses Zusammenhangs wird die Einstrahlfläche derart verändert, dass erstens der Bereich des ersten Bauteils, in dem sich eine Schmelze bildet und damit der Energieinhalt in dieser Schmelze, eingestellt wird und zweitens die Oberflächentemperatur zur Erzeugung einer Dampfphase gesteuert wird.

Besonders bevorzugt sollte das Verhältnis aus der in das erste Bauteil eingestrahlten Laserleistung, die zu der im ersten Bauteil absorbierten Energie $Q_{L,a}$ korreliert, zu der Einstrahlfläche $A_L$ (Lasereinstrahlfläche auf dem ersten Bauteil) konstant gehalten werden und eine Verkleinerung der Einstrahlfläche $A_L$ zur Erzeugung einer höheren Temperatur in dem Zentrum der Einstrahlfläche $A_L$ aufgrund einer Verringerung der konduktiven Verluste in dem ersten Bauteil vorgenommen werden.

Der besondere Vorteil der Veränderung der Einstrahlfläche dahingehend, dass diese vergrößert wird, besteht in dem verringerten Energiebedarf und einer kontrollierteren Bewegungsdynamik für die zweite Phase, und zwar dadurch, dass die Vergrößerung der Einstrahlfläche einen geringeren Oberflächenspannungsgradient an dem ersten Bauteil und somit eine stabilere Schmelzlinse erzeugt.

Eine zeitliche Leistungsmodulation kann durch eine zeitliche Modulation der Laserstrahlung mit einer auf die Dynamik der Schmelze angepassten Leistungsrampe der durch die Laserstrahlung in das erste Bauteil eingebrachten Energie (absorbierte Energie $Q_{L,a}$), bei unveränderter Einstrahlfläche $A_L$, erfolgen. Unter Leistungsrampe ist eine kontinuierliche Vergrößerung oder Verkleinerung oder auch eine Veränderung von Puls/Pause-Verhältnissen zu verstehen.

Eine zeitliche Modulation kann durch stufenweise aufbauende, mehrfache Leistungserhöhungen oder Leistungsverringerungen der Laserstrahlung in der Auslenkungsphase der Schmelzlinse im Spalt vorgenommen werden. Es werden zusätzliche Zwischenintensitäten erhalten, die zu einer Verbreiterung der Schmelzlinse in der Aufschmelzphase führen, die aber so eingestellt werden, dass ein Durchtritt der Laserstrahlung durch die Schmelzlinse verhindert wird.

Der mindestens eine Druckimpuls, der auf die Schmelzlinse ausgeübt wird, um eine Bewegung der Schmelze hin zum zweiten Bauteil auszulösen, kann in einer Ausführungsform des Verfahrens durch einen dem mindestens einen Laserstrahl überlagerten weiteren Laserstrahl ausgeübt werden; die beiden Laserstrahlen, das bedeutet der mindestens Laserstrahl, mit dem in dem ersten Bauteil die Schmelzlinse erzeugt wird, und der Laserstrahl, der den Druckimpuls auf die Schmelzlinse aufbringt, sollten unterschiedliche Intensitäten, Fokusdurchmesser, Pulslängen (zum Beispiel ms-Puls, ns-Puls) und/oder Wellenlängen aufweisen, so dass durch diese zeitlich überlagerte Intensitätsmodulation der zwei überlagerten Laserstrahlen eine unabhängige Steuerung von Schmelzebildung und Dampfbildung ermöglicht wird.

Über eine kurzfristige Leistungsreduktion kann eine Vergrößerung der Schmelzefilmdicke der Schmelzlinse erreicht werden, da die Schmelzedynamik bei Verringerung des Verdampfungsdruckes ein Zuschwappen der Dampfkapillare bewirkt. Eine solche Leistungsreduktion wird nicht durchgeführt, um eine Schwingung der Schmelze anzuregen, sondern um das Schmelzebad in der Aufschmelzphase zu vergrößern bei gleichzeitiger Verhinderung eines Durchtretens der Laserstrahlung durch die Schmelzlinse zu dem zweiten Bauteil hin.

Der weitere Laserstrahl, der vorstehend angegeben ist, oder eine dem mindestens ein Laserstahl überlagerte andere Strahlquelle, kann in einer Ausgestaltung des Verfahrens oberhalb des ersten Werkstücks fokussiert werden und/oder eine Wellenlänge aufweisen, die eine erhöhte Absorption in einer Umgebungsatmosphäre/Plasmawolke oberhalb des ersten Bauteils aufweist. Mit dieser Maßnahme wird durch die Plasmawolke oder durch die in der Umgebungsatmosphäre luftgelösten Fremdpartikel eine Absorptionserhöhung erreicht und dadurch eine Temperatur- und Druckerhöhung oberhalb des Werkstücks in der Auslenkungsphase bewirkt; durch Variation von Laserleistung, Pulsdauer und Pulsfrequenz kann der Laserstrahl so eingestellt werden, dass ein Durchtritt des Laserstrahls durch die Schmelze vermieden wird.

Für eine örtliche Leistungsmodulation ist ein Erwärmen und das Aufschmelzen des ersten Bauteils und dadurch das Auslenken der Schmelze in den Spalt durch eine senkrecht zu der Strahlachse des mindestens einen Laserstrahls kreisende Strahlbewegung, zum Beispiel eine ringförmige Strahlbewegung, eine Strahlbewegung in Form einer 8 oder eine Lissajous-förmige Strahlbewegung mit dem mindestens einen Laserstrahl in der Ebene des ersten Bauteils, von Vorteil. Diese Maßnahme führt zu einer lokalen Temperaturerhöhung und dadurch zu einem Verdampfen des Materials des ersten Bauteils.

Auch diese örtliche Leistungsmodulation reduziert den Energiebedarf in der Aufschmelzphase des ersten Bauteils und führt in der nachfolgenden Phase zu einem geringeren Energieübertrag in das zweite Bauteil, wodurch das zweite Bauteil nur gering durch einen Energieübertrag beansprucht wird.

Eine Anpassung einer Intensitätsverteilung des Laserstrahls im Bereich der Einstrahlfläche des ersten Bauteils kann von einer Gauß-Verteilung des Strahlungsprofils des Laserstrahls zu einer Donut-Verteilung des Strahlprofils oder einer Top-Hat-Verteilung des Strahlprofils erfolgen. Diese Veränderung des Strahlungsprofils, ausgehend von der Gauß-Verteilung, bewirkt eine Steuerung des örtlichen Verdampfungsdrucks und ermöglicht eine Veränderung des Anbindungsquerschnitts und der Flankenwinkel der zu dem zweiten Bauteil hin überschwappenden Schmelze. Ein Flankenwinkel ist hierbei der Winkel zwischen der Oberflächennormale auf dem zweiten Bauteil und der wiedererstarrten Schmelze zwischen den beiden Bauteilen. Dieser Flankenwinkel sollte in einem Bereich von 0-90° mit einem geringen Winkel zwischen Oberfläche des zweiten Bauteils und der wiedererstarrten Schmelze liegen.

Das Fügen kann in einer auf die gewünschte Oberflächenspannungsverteilung der Schmelzlinse abgestimmten Umgebungsatmosphäre vorgenommen werden, um durch die ausgewählte Umgebungsatmosphäre eine Strömung der Schmelze in dem Zentrum der Schmelzlinse je nach Umgebungsgas entweder in die Mitte der Schmelzlinse oder zum Rand der Schmelzlinse zu erzeugen. Dadurch wird ohne eine weitere Leistungsänderung eine Erhöhung der Mittentemperatur oder eine Verbreitung der Schmelzlinse erreicht, wodurch entweder eine direkte Dampfdruckerzeugung oder auch eine Vergrößerung des Anbindungsquerschnitts erzielt wird.

Es ist auch vorgesehen, durch Verändern einer Umgebungsatmosphäre die Absorption des ersten Bauteils zu erhöhen und damit die absorbierte Energie $Q_{L,a}$ im ersten Bauteil zu erhöhen. Hierfür wird je nach Material Sauerstoff oder Stickstoff eingesetzt.

Auf dem ersten Bauteil kann auf der Seite der Einstrahlfläche eine für die Laserstrahlung transparente Deckschicht aufgebracht werden, um dadurch eine Druckkavität zwischen dieser transparenten Deckschicht und dem ersten Bauteil zu bilden. Diese Druckkavität bewirkt, dass unterhalb der Deckschicht das Bauteil aufgeschmolzen wird und beim Verdampfen unterhalb der Schicht der Dampf nicht expandieren kann und hierdurch der Druck erhöht wird.

Das erste Bauteil kann aus zwei Schichten, einer oberen und einer unteren Schicht, zusammengesetzt werden.

In Richtung der Strahlachse des Laserstrahls gesehen weist die obere Schicht, auf die der Laserstrahl gerichtet wird, eine Verdampfungstemperatur auf, die geringer als die Verdampfungstemperatur der unteren Schicht ist, die jedoch höher als die Schmelztemperatur der unteren Schicht ist, so dass die obere Schicht bereits verdampft, wenn die untere Schicht noch flüssig ist. Durch eine solche Werkstoffkombination wird eine materialseitige Minimierung des Energieeintrags erhalten.

Wie bereits beschrieben wurde, ist der Zeitpunkt, zu dem die sich in den Fügespalt ausformende Schmelzlinse die Oberfläche des zweiten Bauteils erreicht, ein entscheidender Zeitpunkt. Um diesen Zeitpunkt zu bestimmen oder zusätzlich zu erfassen, kann eine Messung der Temperatur oder einer zu der Temperatur korrelierenden Größe des ersten Bauteils im Bereich der Schmelzlinse vorgenommen werden. Aus einem Abfall der Temperatur oder einem Abfall der korrelierenden Größe wird der Zeitpunkt eines Kontakts der Schmelze bzw. der Schmelzlinse im Spalt mit dem zweiten Bauteil abgeleitet, und zu diesem Zeitpunkt wird der Energieeintrag, d. h. eine weitere Absorption der Energie $Q_{L,a}$, in dem ersten Bauteil reduziert oder beendet.

Ein solcher Abschaltzeitpunkt für die Energiezufuhr in der Auslenkungsphase kann auch über eine pyrometrische Messung der Temperatur auf der Schmelzlinsenoberseite ermittelt werden, indem bei einem Kontakt der Schmelze mit dem unteren Bauteil ein plötzlicher Temperaturabfall erfasst wird.

Um eine Reduktion des Energiebedarfs beim Schmelzen des ersten Bauteils und eine Vergrößerung der Schmelzlinse zu erreichen, kann zu Beginn des Fügevorgangs in der ersten Phase das erste Bauteil durch eine kreisende Strahlbewegung des Laserstrahls vorgenommen werden, wobei der Kreisdurchmesser im Bereich von 50 - 1000 $\mu$m liegen kann.

Die Parameter für einen Kreisdurchmesser der Strahlbewegung, für die Vorschubgeschwindigkeit des Laserstrahls entlang der Kreisbahn und für die Anzahl der Kreise werden insbesondere auf die Eigenschaften der Werkstoffe und die Parameter des Laserstrahls abgestimmt.

Eine Schmelzeauslenkung mittels Strahlauslenkung in Form eines Mikrorings (örtliche Leistungsmodulation) reduziert zusätzlich den Energiebedarf in der Aufschmelzphase und führt in der nachfolgenden Phase zu einem geringeren Energieübertrag in das Bauteil. In der zweiten Phase kann der Durchmesser der kreisenden Strahlbewegung des Laserstrahls auf einen Durchmesser von 0 - 100 $\mu$m verringert werden, so dass der Wärmeabfluss durch Konduktion reduziert wird mit der Folge, dass sich die Temperatur in der Mitte der Schmelzlinse erhöht und dadurch der Druckimpuls in der Schmelzlinse erzeugt wird.

Die Erfassung der Schmelzebewegung kann auch durch eine Messung der Absolutgeometrie der Oberseite der Schmelzlinse, d.h. der Oberfläche der Schmelzlinsenmitte zur Ebene der Oberfläche des ersten Bauteils, und einer im ersten Bauteil entstehenden Dampfkapillare und einen Durchtritt des Laserstrahls durch die Schmelze erfolgen, um daraus die Auslenkung der über eine Regelung der über den Laserstrahl in das erste Bauteil eingebrachten Energie einzustellen, indem Einstrahldauer, Laserleistung und Laserintensität gesteuert werden. Aus einer Erfassung einer Bewegung der Schmelzlinse an der Oberseite des ersten Bauteils im Bereich der Einstrahlfläche kann der Umfang der absorbierten Energie $Q_{L,a}$ in Abhängigkeit der erfassten Bewegung der Schmelzlinse mit einer ortsselektiven Messtechnik ermittelt werden.

Hierzu ist beispielsweise eine interferometrische Positionsmessung der Schmelzlinsenoberseite vorgesehen. Durch Messung der Absolutposition der Schmelzlinsenoberseite und der entstehenden Dampfkapillare wird ein Durchtritt des Laserstrahls durch die Schmelze und die Auslenkung der Schmelze detektiert, auf die die Laserleistung geregelt wird.

Eine Messung der Auslenkung der Schmelzlinse in den Spalt kann auch elektrisch über eine Widerstands- oder Kapazitätsänderung zwischen dem ersten und dem zweiten Bauteil vorgenommen werden. Durch die sich in den Spalt auslenkende Schmelze wird eine Widerstands- oder Kapazitätsänderung zwischen den Bauteilen hervorgerufen, so dass die Überbrückung des Spalts durch die Schmelzlinse aufgrund dieser Änderung überwacht werden kann.

Es ist auch vorgesehen, dass der Fügevorgang akustisch überwacht wird und aus einem Überschreiten eines Schwellwerts einer akustischen Emission der Zeitpunkt der Kontaktierung der Schmelzlinse mit dem zweiten Bauteil abgeleitet wird. Hierbei kann ein Knall auftreten, der dann herangezogen wird, um den Energieeintrag in das erste Bauteil zu reduzieren oder zu beenden. Hierfür können akustische Sensoren eingesetzt werden, um aus den erfassten, akustischen Signalen die Schmelzausformung zu überwachen, da sich die akustischen Signale in Abhängigkeit von dem Zustand der Dampfkapillare in dem ersten Bauteil und die fortschreitende Auslenkung der Schmelze zu dem zweiten Bauteil hin verändern.

Das Verfahren, wie es vorstehend beschrieben ist, ist auch zum Erzeugen einer durchgehenden Fügenaht geeignet, indem einzelne Punktschweißungen, die nach dem vorstehend beschriebenen Verfahren erzeugt werden, mittels Überlapp, oder aneinander gereiht, zu einer durchgehenden Fügenaht kombiniert werden, indem der Laserstrahl entlang der zu erzeugenden Fügenaht schrittweise versetzt wird und an den versetzten Positionen jeweils eine solche Punktschweißung vorgenommen wird.

Das Verfahren ist besonders für das Fügen von Bauteilen geeignet, bei denen das Grundsubstrat des zweiten Bauteils aus Keramik, Silizium, Germanium, Kunststoffverbindungen/Epoxidharz/FR4 Leiterplattenmaterial oder Glasarten, insbesondere Quarzglas, besteht und auf dem eine metallische Schicht als Fügepartner aufgebracht ist.

Weitere Einzelheiten und Merkmale der Erfindung ergeben sich aus den beigefügten Figuren.

Figur 1     zeigt eine schematische Darstellung, um das erfindungsgemäße Verfahren zum Fügen von zwei Bauteilen zu erläutern.

Figur 2     zeigt ein Diagramm, das die Temperatur T in Abhängigkeit der Eindringtiefe z in dem zweiten Bauteil darstellt.

Figur 3     zeigt einen Fügeverbund, der zwischen einem 200 $\mu$m dicken Cu-Substrat auf einer 35 $\mu$m dünnen Metallisierung und einem Si-Substrat vorgenommen ist.

Figur 4     zeigt drei Phasen (a), (b) und (c) zum Fügen von zwei Bauteilen unter Anwenden einer örtlichen Leistungsmodulation.

Figur 5     zeigt drei Phasen (a), (b) und (c) zum Fügen von zwei Bauteilen unter Anwenden einer zeitlichen Fokusmodulation über eine Änderung der Einstrahlfläche.

Figur 6     zeigt drei Phasen (a), (b) und (c) zum Fügen von zwei Bauteilen unter Anwenden einer zeitlichen Leistungsmodulation mit einer Temperaturerhöhung und einem Druckimpuls, hervorgerufen durch eine Verdampfung.

Figur 7     zeigt drei mögliche Leistungsprofile (a), (b) und (c) für eine zeitliche Leistungsmodulation der Laserstrahlung.

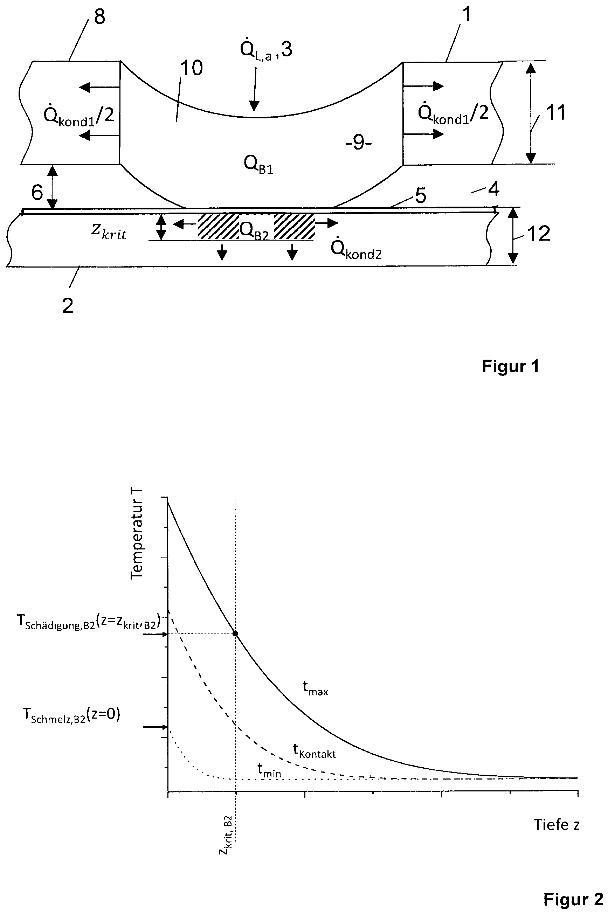

In Figur 1 ist schematisch ein Fügevorgang entsprechend dem erfindungsgemäßen Verfahren zum Fügen von zwei Bauteilen, einem oberen ersten Bauteil 1 und einem unteren zweiten Bauteil 2, dargestellt. Dem oberen Bauteil 1 ist in den verwendeten Größen der Index B1 zugeordnet, während dem unteren Bauteil 2 der Index B2 zugeordnet ist.

Zu Beginn des Fügevorgangs werden die zwei Bauteile 1, 2 mit Abstand thermisch getrennt zueinander positioniert, so dass zwischen den Bauteilen 1, 2, in Richtung deren Dicke, angedeutet durch den Richtungspfeil 3, ein Fügespalt 4 verbleibt. Das zweite Bauteil 2 besitzt auf seiner dem ersten Bauteil 1 zugewandten Seite eine metallische Schicht 5, die mit der Schmelze des ersten Bauteils eine stoffschlüssige Verbindung eingehen soll. Die Breite 6 des Fügespalts 4 wird so bemessen, dass sie eine kleinstmögliche Abmessung besitzt, bei der noch eine thermische Trennung der Fügepartner, das bedeutet des Bauteils 1 und des Bauteils 2, erreicht wird.

Dann wird ein Laserstrahl 7 in Richtung der Dicke der Bauteile 1, 2 auf das erste Bauteil 1 auf dessen dem zweiten Bauteil 2 abgewandten Oberfläche 8 gerichtet. Die durch den Laserstrahl 7 oder mehrere Laserstrahlen bestrahlte Oberfläche wird als Einstrahlfläche $A_L$ bezeichnet und hängt von dem Durchmesser des Laserstrahls 7, mit dem er auf die Oberfläche 8 des zweiten Bauteils 2 auftrifft, ab. Durch die in dem ersten Bauteil 1 eingebrachte und absorbierte Energie $Q_{L,a}$ wird das erste Bauteil 1 lokal über dessen gesamte Dicke aufgeschmolzen. Durch die thermische Trennung der Bauteile 1, 2 über den Fügespalt 4 wird insgesamt weniger Energie in der Aufschmelzphase des oberen Bauteils 1 benötigt, da erstens keine konduktive Wärmeleitung von dem ersten Bauteil 1 zu dem zweiten Bauteil 2 erfolgt und zweitens das zweite Bauteil durch das Aufschmelzen des ersten Bauteils thermisch nicht beeinflusst wird.

Die Größe der Aufschmelzzone sollte, in Richtung der Oberfläche 8 des ersten Bauteils 1 gesehen, zumindest der Größe einer zu erzeugenden Fügezone entsprechen.

Die Fügezone ist der Bereich der zwei Bauteile 1, 2, im Bereich derer die beiden Bauteile 1, 2 durch Verschmelzung miteinander verbunden werden.

Die durch den mindestens einen Laserstrahl in dem ersten Bauteil 1 absorbierte Energie $Q_{L,a}$ wird so eingestellt, dass sie durch die Bedingung

$$\text{absorbierte Energie} = Q_{L,a} = \int \dot{Q}_{L,a}\,dt = Q_{B1} + \int \dot{Q}_{kond1}\,dt + dH_{M1} + Q_{B2} + \int \dot{Q}_{kond2}\,dt + dH_{M2}$$

erfüllt ist, mit

$Q_{L,a} = \int \dot{Q}_{L,a}\,dt$           im ersten Bauteil absorbierte Energie

$Q_{B1} = \rho_1 \cdot A_1 \cdot s_{B1} \cdot c_{p1} \cdot (T_{m1} - T_0)$     benötigte Energie zum Erzeugen einer lokalen Schmelzlinse in dem ersten Bauteil

                           mit $\rho_1$ = Dichte des ersten Bauteils,
                           $A_1$ = In Richtung der Laserstrahlausbreitung projizierte Fläche der Schmelzlinse in dem ersten Bauteil

$s_{B1}$ = Dicke des ersten Bauteils,
$c_{p1}$ = Wärmekapazität des ersten Bauteils,
$T_{m1}$ = Schmelztemperatur des ersten Bauteils,
$T_0$ = Umgebungstemperatur

$\int \dot{Q}_{Kond1} dt = Q_{kond1}$ konduktive     Wärmeleitungsverluste im ersten Bauteil

$dH_{M1}$ Enthalpie     für einen Materialphasenwechsel im ersten Bauteil

$Q_{B2} = \rho_2 \cdot A_2 \cdot s_{B2} \cdot c_{p2} \cdot (T_{m2} - T_0)$     benötigte Energie zum Erzeugen eines lokalen Schmelzfilms in dem zweiten Bauteil mit

$\rho_2$ = Dichte des zweiten Bauteils,
$A_2$ = In Richtung der Laserstrahlausbreitung projizierte Fläche des Schmelzfilms in dem zweiten Bauteil
$s_{B2}$ = Dicke des Schmelzfilms im zweiten Bauteil,
$c_{p2}$ = Wärmekapazität des zweiten Bauteils,
$T_{m2}$ = Schmelztemperatur des zweiten Bauteils,
$T_0$ = Umgebungstemperatur

$\int \dot{Q}_{Kond2} dt = Q_{kond2}$     konduktive Wärmeleitungsverluste im zweiten Bauteil

$dH_{M2}$     Enthalpie für einen Materialphasenwechsel im zweiten Bauteil

Damit ist eine erste Phase des Verfahrens abgeschlossen.

Nun wird, in einer zweiten Phase, mindestens ein Druckimpuls auf das aufgeschmolzene Material 9 bzw. die Schmelzlinse 10 in Richtung (Richtungspfeil 3) des zweiten Bauteils 2 appliziert, bis sich die Schmelzlinse 10 infolge des Druckimpulses in den Fügespalt 4 auslenkt. Der Fügespalt 4 wird dann durch die Schmelzlinse 10 überbrückt und tritt mit dem zweiten Bauteil 2 in Kontakt, wie dies die Figur 1 darstellt. Durch den Kontakt der Schmelzlinse 10 mit dem zweiten Bauteil 2 erfolgt ein Energieübertrag auf das zweite Bauteil 2. Durch die in das zweite Bauteil 2 transferierte Energie $Q_{B2}$ und damit durch den Energieübertrag auf das zweite Bauteil 2 ergibt sich ein solcher Temperaturverlauf in dem zweiten Bauteil 2, dass auf dessen Oberseite, die durch die metallische Schicht 5 abgedeckt ist, die Schmelztemperatur erreicht wird. Der Schmelzfilm der metallischen Schicht 5 geht mit der Schmelzlinse 10 dann eine stoffschlüssige Verbindung ein, die beim Abkühlen erstarrt und die beiden Bauteile verbindet.

Die Wärmeeindringtiefe in das zweite Bauteil 2 wird aufgrund einer Kontaktzeit $t_{Kontakt}$, bezeichnet als die Zeit zwischen einem ersten Kontakt der Schmelzlinse 10 mit dem zweiten Bauteil 2 und der Erstarrung des in der Schmelzlinse 10 aufgeschmolzenen Materials 9, so eingestellt, dass in einer vorgegebenen Tiefe des zweiten Bauteils 2 eine das zweite Bauteil 2 schädigende Schädigungstemperatur $T_{schädigung}$ nicht überschritten wird. Hierbei werden die konduktiven Wärmeleitungsverluste $\int \dot{Q}_{Kond2} dt = Q_{kond2}$ im zweiten Bauteil 2 berücksichtigt.

Die Schädigungstemperatur $T_{schädigung}$ im zweiten Bauteil 2 ist definiert als die Temperatur T in einer Tiefe $z_{krit}$ des zweiten Bauteils 2 ($z_{krit,B2}$), in Richtung dessen Dicke 12 gesehen, bei der entweder eine Schädigung des unter der metallischen Schicht 5 des zweiten Bauteils 2 liegenden Materials auftritt oder eine Ablösung der metallischen Schicht 5 auf dem zweiten Bauteil 2 von dem darunterliegenden Material (Basismaterial) erfolgt.

Das Aufschmelzen des oberen Fügepartners, d.h. des oberen Bauteils 1, mittels der Laserstrahlung wird mit einer definierten Überhitzung der Schmelze in einem Bereich zwischen der Schmelz- und Verdampfungstemperatur in Abstimmung auf die Fügepartner, die Bauteile 1 und 2, vorgenommen. Eine definierte Überhitzung bedeutet, dass die in dem ersten Bauteil 1 absorbierte Energie $Q_{L,a}$ nicht zur vollständigen Verdampfung der Schmelzlinse führt, jedoch so groß ist, dass nach Kontakt der Schmelzlinse mit der Metallschicht 10 des zweiten Bauteils und der damit verbundenen Energieableitung in das Bauteil 2 die Schmelzlinse nicht sofort erstarrt, sondern erst nach Eingehen einer stoffschlüssigen Verbindung der beiden Bauteile die Erstarrung einsetzt.

Die Auslenkung der Schmelze 9 bzw. der Schmelzlinse 10 über den Fügespalt 4 zu dem unteren Bauteil 2 hin mittels einer Transfertechnik, beispielsweise einer Modulation der Laserstrahlung, wird unter Energieeinbringung in die Schmelze 9 so ausgeführt, dass der untere Bereich der Schmelzlinse 10 mit der Oberseite des zweiten Bauteils 2 in Kontakt tritt und ein Schmelzetransfer erreicht wird. Der Energieeintrag und damit die Erhöhung der Temperatur an der Grenzfläche zwischen Schmelzlinse 10 und Oberseite des zweiten Bauteils 2 wird nach Auslenkung der Schmelze 9 bzw. der Schmelzlinse 10 und deren Kontakt mit dem zweiten Bauteil 2 so reduziert, dass eine ausreichende Vermischung der Fügepartner erfolgt, ohne jedoch die kritische Temperatur an der Grenzfläche zwischen Metallschicht auf dem zweiten Bauteil 2 und dem jeweiligen Substratmaterial zu überschreiten.

Das erfindungsgemäße Verfahren nutzt eine definierte Schmelzüberhitzung zum Aufheizen des unteren Bauteils 2 als Fügepartner über die Schmelztemperatur $T_{m2}$ aus. Der notwendige Energieüberschuss in der Schmelzlinse berechnet sich dabei zu $E_m = \rho c_p V \Delta T$; $E_m$ ist hierbei notwendige Energie zum Erzeugen eines dünnen Schmelzfilms in der Metallschicht des Bauteils 2, $\rho$ ist die Dichte der Metallschicht des Bauteils 2, $c_p$ ist die spezifische Wärme der Metallschicht des Bauteils 2, V ist das Volumen des Schmelzfilms und $\Delta T$ ist gegeben durch $\Delta T = (T_{m,unterer\ Fügepartner}$ + Temperaturüberhöhung) zum Ausgleich von Wärmeverlusten durch Wärmeleitung und Schmelzenthalpie im unteren Fügepartner. Die Schmelze (aufgeschmolzenes Material) 9 wird überhitzt mit Anpassung auf das benötigte Schmelzvolumen und die benötigte Energie $E_m$ zum Aufschmelzen der unteren Metallisierung (metallische Schicht 5). Bei der metallischen Schicht 5 kann es sich beispielsweise um eine 20 $\mu$m dicken Metallisierung auf einem temperaturempfindlichen Substrat handeln. Der untere Fügepartner, das zweite Bauteil 2, wird verfahrensgemäß nur mit der in der Schmelze 9 enthaltenen Energie $Q_{B2}$ aufgeschmolzen.

Zur Minimierung des Energieeintrags in der Auslenkphase wird der Prozess dahingehend gesteuert, dass die Schmelzeauslenkung die geringste Auslenkung ist, die noch eine Anbindung der Schmelze über den gewählten Spalt auf das untere Bauteil ermöglicht.

Die Anbindung der Schmelze an das untere Bauteil und somit der Fügeprozess wird im Wesentlichen nur durch die in der Schmelze 9 vorhandene Energie erreicht, so dass der gesamte Energieeintrag in die beiden Bauteile und der Energieeintrag in das untere, zweite Bauteil 2 auf einem minimalen Wert gehalten wird.

Die nach dem erfindungsgemäßen Verfahren eingesetzte Modulationstechnik, um die Schmelzlinse 10 in den Fügespalt 4 zu dem zweiten Bauteil hin auszulenken, wird dahingehend vorgenommen, dass die Intensität der Laserstrahlung, bezeichnet als $I_2$, in der Auslenkungsphase einen Grenzwert, bezeichnet als $I_{Grenzwert}$, unterschreitet ($I_2 < I_{Grenzwert}$), der ansonsten zu einem signifikanten Durchtritt des Laserstrahls bzw. der Laserstrahlung durch die Schmelzlinse 10 führt und die energetische Belastungsgrenze des unteren Bauteils 2 überschreitet. Der Grenzwert $I_{Grenzwert}$ ist unter anderem abhängig von der Geometrie und dem Material der Fügepartner 1, 2 und der Modulationstechnik/Strahlführung.

Die ausgelenkte Schmelze führt in einer Anbindungsphase zu einem Benetzen der Schmelze mit der Metallschicht des zweiten Bauteils 2 und zu einer Fügeverbindung der beiden Bauteile 1, 2 über den Fügespalt 4 hinweg. Der externe Energieeintrag über die Laserstrahlung wird, wie bereits vorstehend erwähnt ist, mit oder kurz nach dem Kontakt der Schmelze mit dem unteren, zweiten Bauteil 2 beendet, wodurch der Energieeintrag in das untere Bauteil 2 primär nur noch durch die in der Schmelze 9 enthaltene Energie ($Q_{B2}$) erfolgt.

Figur 2 zeigt ein Diagramm, das die Temperatur T (in dem zweiten Bauteil 2) in Abhängigkeit der Eindringtiefe z in dem zweiten Bauteil 2 darstellt. In diesem Diagramm gibt die Kurve, die in unterbrochener Linie dargestellt und mit $t_{Kontakt}$ bezeichnet ist, den zeitlichen Verlauf der Eindringtiefe z in das zweite Bauteil 2 ab einem ersten Kontakt der Schmelzlinse 10 mit dem zweiten Bauteil 2 an. Die beiden anderen Kurven für $t_{max}$ in durchgezogener Linie und für $t_{min}$ in punktierter Linie geben die Zeiten an, die minimal und maximal für erstens ein Erreichen der Schmelztemperatur an der Oberfläche des zweiten Bauteils bzw. zweitens für ein Erreichen einer kritischen Schädigungstemperatur in der Tiefe $z_{krit}$ im zweiten Bauteil einzuhalten sind.

Die Kurven sind aus der eindimensionalen Wärmegleichung

$$T(z,t) - T_\infty = \frac{2 \cdot (q_F + I_{L,t})}{\rho \cdot c_p} \sqrt{\frac{t}{\kappa}} \, ierfc(\frac{z}{\sqrt{4\kappa t}})$$

mit

*T(z,t):* Temperaturverlauf im zweiten Bauteil in der Tiefe z zum Zeitpunkt t
$T_\infty$: Umgebungstemperatur
*ierfc:* komplementäres Fehlerintegral (integral error function complement)
$q_F$: Wärmeeintrag in das zweite Bauteil 2 mit $q_F = \dot{Q}/A_{Kontakt} = \alpha \cdot (T_1 - T_2)$
$I_{L,t}$: Intensität der durch die Schmelze 9 transmittierten Laserstrahlung 7
$\alpha$: Wärmeübergangskoeffizient zwischen dem ersten und dem zweiten Bauteil 1, 2
$T_1$: Temperatur im ersten Bauteil 1 zur Kontaktzeit der Schmelze 9 mit dem zweiten Bauteil 2
$T_2$: Temperatur im zweiten Bauteil 2 zur Kontaktzeit der Schmelze 9 mit dem zweiten Bauteil 2
*t:* Zeit ab einem ersten Kontakt Schmelze 9 mit Bauteil 2
$A_{Kontakt}$: Kontaktfläche zwischen Schmelze 9 und Metallschicht auf Bauteil 2
$\kappa$: Wärmeleitfähigkeit des unteren (zweiten) Bauteils 2
$\rho$: Dichte des unteren (zweiten) Bauteils 2
$c_p$: Wärmekapazität des unteren (zweiten) Bauteils 2
z: Tiefe im Bauteil gemessen von der oberen Seite des zweiten Bauteils 2 abgeleitet.

Auf der Temperaturachse sind die Temperaturen $T_{Schädigung, B2}(z=z_{krit, B2})$ und $T_{Schmelz, B2}(z=0)$ markiert; die Temperatur $T_{Schädigung, B2}(z-z_{krit, B2})$ gibt die Temperatur an, bei der in dem zweiten Bauteil 2 in der Tiefe $z_{krit}(z_{krit,B2})$, die von der Oberseite des zweiten Bauteils 2 aus gemessen ist, und die in Figur 1 angegeben ist, eine Schädigung auftritt, während $T_{Schmelz, B2}(z=0)$ die Schmelztemperatur an der Oberfläche des zweiten Bauteils 2, also in der Tiefe $z=0$, angibt.

Es ist zu erkennen, dass durch das Einstellen des Wärmeeintrags $q_F$ und der Kontaktzeit $t_{kontakt}$ über die Bauteiltiefe derart erfolgt, dass im Maximalfall ohne konduktive Verluste bei $Q(t)=const.$; $Q_{B2}(t=t_{Kontakt})=Q_{B2}(t=t_{Erstarrung})$ auch in der Abkühlphase zu einem beliebigen Zeitpunkt t die Schädigungstemperatur $T_{Schädigung}$ in der Bauteiltiefe $z_{krit,B2}$ des zweiten Bauteils 2, in Richtung dessen Dicke gesehen, nicht überschritten wird. Anhand der Grafik der Figur 2 ist auch zu erkennen, dass der Temperaturgradient in die Tiefe des Bauteils 2 derart eingestellt wird, dass zu jedem beliebigen Zeitpunkt nach Aufheizen der Metallschicht des Bauteils 2 die kritische Schädigungstemperatur nicht überschritten wird. Der Energieeintrag in das Bauteil 2 wird über konduktive Wärmeleitung so verteilt, dass sich die Temperatur im Bauteil 2 ausgleicht ohne die kritische Temperatur an der Grenzfläche zwischen Metallisierung und Substrat zu überschreiten.

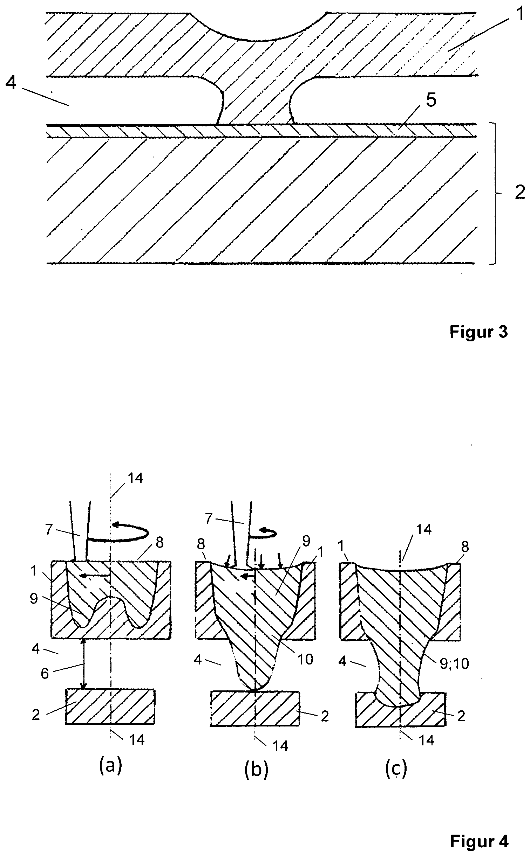

Figur 3 zeigt schematisch einen Fügeverbund über einen Fügespalt 4, der nach dem erfindungsgemäßen Verfahren zwischen einem oberen, ersten Bauteil 1 und einem unteren, zweiten Bauteil 2 erstellt wurde. Bei dem oberen, ersten Bauteil 1 handelt es sich um einen 200 $\mu$m dicken Cu-Kontakt und bei dem unteren zweiten Bauteil 2 handelt es sich um ein Siliziumsubstrat, das auf seiner Oberseite mit einer 35 $\mu$m dicken Metallisierung aus Kupfer (metallische Schicht 5) beschichtet ist. Diese Darstellung verdeutlicht, dass für eine schmelzflüssige Kontaktierung eines dicken Anschlusskontakts mit einer dünnen Metallisierung auf einem temperaturempfindlichen Substrat der Energieübertrag dadurch minimiert wird, dass der wesentliche Energieanteil zur Schmelzebildung im Anschlusskontakt ohne einen thermischen Kontakt zur dünnen Metallisierung eingebracht wird. Beim Kontakt der Schmelze mit der Metallisierung wird durch die heiße Schmelze die Metallschicht zwar angeschmolzen, beim anschließenden Abkühlen geht die in der Schmelze eingebrachte Energie jedoch in den Anschlusskontakt und nicht in das temperaturempfindliche Bauteil.

Figur 4 zeigt drei Phasen (a), (b) und (c) zum Fügen von zwei Bauteilen 1, 2 unter Anwenden einer örtlichen Leistungsmodulation. In diesen Figuren ist die metallische Schicht 5 auf der Oberseite des zweiten Bauteils 2 nicht dargestellt. Zu Beginn des Fügevorgangs (Phase (a)) werden die beiden Bauteile 1, 2 so beabstandet, dass zwischen diesen ein Fügespalt 4 mit einem definierten Abstand 6 (Breite des Fügespalts) gebildet ist. Der eingesetzte Laserstrahl 7 bzw. die eingesetzte Laserstrahlung wird, in Bezug auf eine Achse 14, mit einer kreisenden Bewegung über die Oberfläche 8 des ersten Bauteils 1 geführt, so dass das Material des ersten Bauteils 1 kreisförmig aufgeschmolzen wird. Entsprechend schreitet die Zone des aufgeschmolzenen Materials in dem äußeren, senkrecht zu der Achse 14 gesehenen Bereich schneller fort als in einem mittleren Bereich nahe der Achse 14. Mit fortschreitendem Energieeintrag über mehrfaches Laserrotieren entsprechend der kreisförmigen Bewegung wird über Wärmeleitung der innere Bereich ebenfalls aufgeschmolzen, so dass eine homogene Schmelzphase entsteht. In der Phase (b) wird dann der Radius der kreisenden Bewegung des Laserstrahls 7 im Vergleich zu dem Radius in der Phase (a) verkleinert, so dass die Temperatur in der Mitte der Schmelze schlagartig erhöht und die Verdampfungsschwelle überschritten wird.

Die Schmelzeauslenkung wird durch Verdampfung aufgrund einer Temperaturerhöhung durch eine Bewegung des Laserstrahls 7 in Mikroringen und sukzessive Veränderung des Durchmessers der Kreisbewegung (Übergang von Phase (a) zu Phase (b)) erzielt. In Phase (a) kann eine Vorwärmung mit einem großen Kreisdurchmesser der Strahlbe-wegung von beispielsweise 200 $\mu$m und dann für die Phase (b) die Auslenkung des aufgeschmolzenen Materials 9 über den kleiner werdenden Durchmesser der Kreisbewegung mit einem Durchmesser von 50 $\mu$m hervorgerufen werden. Folglich wird der Durchmesser der ursprünglichen Kreisbewegung um etwa den Faktor 4 verringert. Um zu bewirken, dass keine unkontrollierte Verdampfung eintritt, wird die Intensität der Laserstrahlung zwischen der Phase (a) und der Phase (b) konstant gehalten oder sogar in der Auslenkungsphase (Phase (a)) im Vergleich zu der Vorwärmphase (Phase (b)) verringert. Damit wird ein homogener Übergang zwischen Schmelzebildung und Verdampfung mit kontrollierter Druckausbildung erreicht, die die Schmelze in den Fügespalt überträgt.

Wenn das aufgeschmolzene Material 9 die Unterseite des ersten Bauteils 1 erreicht, überbrückt das aufgeschmolzene Material 9 den Fügespalt 4, bis die Schmelzlinse 10 auf die Oberseite des zweiten Bauteils 2 auftrifft. Dieser Zeitpunkt wird mittels verschiedener Methoden erfasst, wie dies oben beschrieben wurde, so dass zu diesem Zeitpunkt der Laserstrahl in seiner Leistung reduziert oder ganz abgeschaltet wird. Dadurch wird sichergestellt, dass durch das aufgeschmolzene Material 9 das zweite Bauteil 2 nur geringfügig angeschmolzen wird und sich mit dieser Schmelze des zweiten Bauteils 2 verbindet, so dass nach Abkühlung ein Fügeverbund entsteht, der in Phase (c) der Figur 4 dargestellt ist

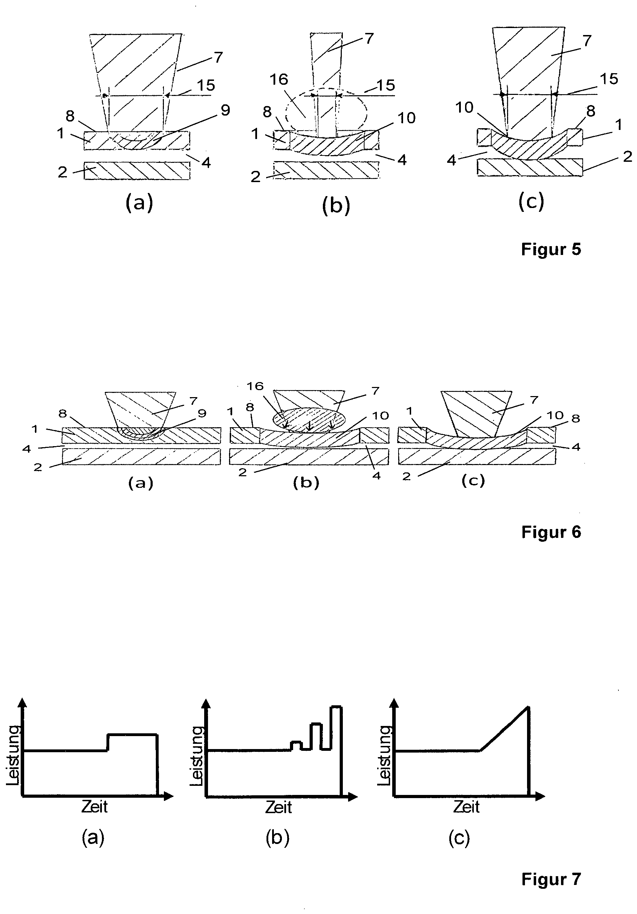

Figur 5 zeigt drei Phasen (a), (b) und (c) zum Fügen von zwei Bauteilen 1, 2 unter Anwenden einer zeitlichen Fokusmodulation der Laserstrahlung und über eine Änderung der Einstrahlfläche. Wiederum stellen Phase (a) die Aufwärmphase, Phase (b) die Auslenkphase und Phase (c) die Anbindungsphase dar.

Wesentlich ist, dass bei einer zeitlichen Fokusmodulation die Intensität der Laserstrahlung 7 mittels dynamischer Veränderung des Fokus, beispielsweise über ein elektromagnetisches Teleskop, bei konstanter Leistung der Laserstrahlung verändert wird.

In der Vorwärmphase (a) wird das Bauteil 1 mit einem großen Strahldurchmesser der Laserstrahlung 7 bestrahlt, so dass sich eine gemäß dem Strahldurchmesser und der Wärmeleitung bestimmte Schmelzlinse 10 ausbildet, wobei der Durchmesser 15 des Laserstrahls 7 so eingestellt wird, dass es an der Oberfläche 8 nicht zur Verdampfung kommt und auch keine Kapillare ausgebildet wird. Es wird wiederum in dem ersten Bauteil 1 aufgeschmolzenes Material gebildet, bis dieses Material die Unterseite des Bauteils 1 erreicht.

In der darauf folgenden Auslenkungsphase (b) wird der Durchmesser 15 der Laserstrahlung 7 so verringert, dass die Intensität zum Erreichen der Verdampfungstemperatur erreicht wird und sich oberhalb des Bauteils 1 eine Dampfwolke 16 bildet, die auf die Schmelze (Schmelzlinse 10) einen Dampfdruck ausübt. Alternativ kann dies auch durch Vergrößerung des Laserstrahls 7 und einer damit verbundenen reduzierten seitlichen Wärmeableitung erfolgen, so dass auch hier in der Mitte der Schmelzlinse 10 eine Verdampfungskeule ausbildet, die die Schmelze in Richtung des Bauteils 2 drückt.

In der Anbindungsphase (c), in der die Schmelzlinse 10 den Fügespalt 4 überbrückt, wird der Durchmesser 15 der Laserstrahlung 7 wieder vergrößert, um die Bildung einer Dampfkapillare zu vermeiden, die ansonsten das Bauteil 2 thermisch beeinflussen würde. Je nach Fügegeometrie und Werkstoff wird der Fügeverbund noch kurzzeitig mit Laserstrahlung beaufschlagt, bis an der Grenzfläche zwischen beiden Bauteilen 1, 2 eine homogene, schmelzflüssige Zone entstanden ist, die nach Ausschalten des Laserstrahls 7 erstarrt. Eine solche zeitliche Fokusmodulation über die Änderung der Einstrahlfläche der Laserstrahlung 7 in das erste Bauteil 1 hat den Vorteil, dass mit einer konstanten Leistung der Laserstrahlung 7 gearbeitet wird und die örtliche Verteilung der Intensität, mit der die Laserstrahlung 7 auf die Oberseite des ersten Bauteils 1 auftrifft, über die dynamische Veränderung des Fokus vorgenommen wird.

Figur 6 zeigt wiederum drei Phasen (a), (b) und (c) zum Fügen von zwei Bauteilen 1, 2 unter Anwenden einer zeitlichen Leistungsmodulation mit einer Temperaturerhöhung und einem Druckimpuls, hervorgerufen durch eine Verdampfung. In Phase (a) wird die Laserstrahlung 7 auf die Oberseite 8 des ersten Bauteils 1 gerichtet, so dass sich, entsprechend der vorstehend anhand der Figur 5 beschriebenen Phase (a), aufgeschmolzenes Material 9 in dem ersten Bauteil 1 bildet. Der Laserstrahl 7 wird während des gesamten Fügevorgangs unverändert bezüglich seiner Größe gehalten.

In Phase (b) wird die Leistung erhöht, um die Verdampfungstemperatur zu überschreiten, so dass über den sich bildenden Dampfdruck die Schmelzlinse 10 zum Bauteil 2 bewegt und dadurch der Fügespalt 4 überbrückt wird.

In Phase (c) wird der Fügeverbund noch kurzzeitig mit Laserstrahlung 7 beaufschlagt, bis an der Grenzfläche zwischen beiden Bauteilen 1, 2 eine homogene schmelzflüssige Zone entstanden ist, die nach Ausschalten des Laserstrahls erstarrt. Figur 7 nun zeigt drei mögliche Leistungsprofile (a), (b) und (c) für eine zeitliche Leistungsmodulation der Laserstrahlung, die vorzugsweise dann eingesetzt wird, wenn auf die unterschiedlichen Wärmeableitbedingungen des Bauteils 2 Rücksicht genommen werden muss, um eine homogene Schmelze im Bauteil 1 zu erzeugen. In diesen Profilen ist die Leistung der Laserstrahlung über der Zeit, d.h. die Zeit des Fügevorgangs, aufgetragen.

Das Profil (a) zeigt ein Rechteckprofil mit wiederum einer konstanten Leistung in der Vorwärmphase und einer stufenförmigen Erhöhung der Leistung für die Anbindungsphase, die dann in der Anbindungsphase konstant beibehalten wird.

Das Profil (b) zeigt ein Profil, das als Peakprofil bezeichnet werden kann, mit einer konstanten Leistung in der Vorwärmphase und zunehmend höheren Leistungspeaks während der Anbindungsphase.

Das Profil (c) zeigt ein Rampenprofil, bei dem die Leistung der Laserstrahlung über die Vorwärmphase (VWP), die den Phasen (a) der Figuren 5 und 6 entspricht, konstant gehalten wird, während die Leistung für die sich an die Vorwärmphase anschließende Anbindungsphase rampenförmig erhöht wird.

Von diesen Profilen sollte das Profil (a) dann angewandt werden, wenn die Geometrie des Bauteils 1 gegenüber der Metallisierung des Bauteils 2 nur geringfügig größer ist und der damit verbundene Energieeintrag in das Bauteil 2 eine Überschreitung der kritischen Temperatur im Bauteil 2 vermeidet. Dagegen ist ein Peakprofil (b) für Fälle zu bevorzugen, bei denen eine hohe Wärmeableitung im Bauteil 2 eine homogene und ausreichende Ausbildung der Schmelzlinse nicht zulässt. Hier wird durch eine schnelle Leistungsmodulation mit zunehmender Peakleistung eine kontrollierte Energiedeposition und ein kontrolliertes Verdampfen möglich, ohne dass der Laserstrahl durch die Schmelzlinse des ersten Bauteils tritt. Dem Rampenprofil (c) ist dann der der Vorzug zu geben, wenn messtechnische Instrumente zur Steuerung des Prozesses eingesetzt werden oder wenn nach Kontakt der Schmelzlinse mit dem Bauteil 2 die Wärmeableitung im Bauteil 2 so hoch wird, dass die Schmelze zu schnell erstarrt, so dass keine ausreichende Durchmischung und Fügefestigkeit erreicht wird. Hier wird durch die zusätzliche Energiedeposition die nötige Energie zu dosiert.

**Patentansprüche**

1. Verfahren zum Fügen von zwei Bauteilen (1, 2) im Bereich einer Fügezone, die die zu verbindenden freien Flächen der beiden Bauteile definiert, mittels mindestens einem Laserstrahl (7) mit folgenden Verfahrensschritten:

Positionieren eines ersten Bauteils (1) im Bereich der Fügezone thermisch getrennt mit Abstand zu einem zweiten Bauteil (2), in Richtung deren Dicke gesehen, einen Fügespalt (4) bildend, wobei das zweite Bauteil (2) auf der dem ersten Bauteil (1) zugewandten Seite eine metallische Schicht (5) aufweist, in einer ersten Phase Richten des Laserstrahls (7) in Richtung der Dicke (11, 12) der Bauteile (1, 2) auf das erste Bauteil (1) auf dessen dem zweiten Bauteil (2) abgewandten Oberfläche (8), wobei die durch den Laserstrahl (7) bestrahlte Oberfläche (8) als Einstrahlfläche ($A_L$) bezeichnet wird, und Aufschmelzen des ersten Bauteils lokal, zumindest entsprechend der Größe der Fügezone, über dessen gesamte Dicke (11), und dann, in einer zweiten Phase, Applizieren mindestens eines Druckimpulses auf die Schmelze in Richtung des zweiten Bauteils (2) bis sich die Schmelzlinse (10) infolge des Druckimpulses in den Fügespalt (4) auslenkt, den Fügespalt (4) überbrückt und mit dem zweiten Bauteil (2) in Kontakt tritt und durch den Kontakt der Schmelzlinse (10) mit dem zweiten Bauteil (2) ein Energieübertrag auf das zweite Bauteil (2) stattfindet, **dadurch gekennzeichnet, dass**

die über den Laserstrahl (7) in dem ersten Bauteil (1) absorbierte Energie ($Q_{L,a}$) so gewählt wird, dass die Bedingung

$$\text{absorbierte Energie} = Q_{L,a} = \int \dot{Q}_{L,a}\,dt = Q_{B1} + \int \dot{Q}_{kond1}\,dt + dH_{M1} + Q_{B2} + \int \dot{Q}_{kond2}\,dt + dH_{M2}$$

erfüllt ist, mit

$Q_{L,a} = \int \dot{Q}_{L,a}\,dt$ im ersten Bauteil (1) absorbierte Energie
$Q_{B1} = \rho_1 \cdot A_1 \cdot s_{B1} \cdot c_{p1} \cdot (T_{m1}-T_0)$ benötigte Energie zum Erzeugen einer lokalen Schmelzlinse (10) in dem ersten Bauteil (1)

mit $\rho_1$ = Dichte des ersten Bauteils (1),
$A_1$ = In Richtung der Laserstrahlausbreitung projizierte Fläche der Schmelzlinse,
$s_{B1}$ = Dicke (11) des ersten Bauteils (1),
$c_{p1}$ = Wärmekapazität des ersten Bauteils (1),
$T_{m1}$ = Schmelztemperatur des ersten Bauteils (1),
$T_0$ = Umgebungstemperatur

$\int \dot{Q}_{Kond1}\,dt = Q_{kond1}$ konduktive Wärmeleitungsverluste im ersten Bauteil (1)
$dH_{M1}$ Enthalpie für einen Materialphasenwechsel im ersten Bauteil (1)
$Q_{B2} = \rho_2 \cdot A_2 \cdot s_{B2} \cdot c_{p2} \cdot (T_{m2}-T_0)$ benötigte Energie zum Erzeugen eines lokalen Schmelzfilms in dem zweiten Bauteil (2)

mit $\rho_2$ = Dichte des zweiten Bauteils (2),
$A_2$ = In Richtung der Laserstrahlausbreitung projizierte Fläche des Schmelzfilms,
$s_{B2}$ = Dicke des Schmelzfilms im zweiten Bauteil (2),
$c_{p2}$ = Wärmekapazität des zweiten Bauteils (2),
$T_{m2}$ = Schmelztemperatur des zweiten Bauteils (2),
$T_0$ = Umgebungstemperatur

$\int \dot{Q}_{Kond2}\,dt = Q_{kond2}$ konduktive Wärmeleitungsverluste im zweiten Bauteil (2)
$dH_{M2}$ Enthalpie für einen Materialphasenwechsel im zweiten Bauteil (2)

wodurch sich in dem ersten Bauteil (1) aus dem aufgeschmolzenen Material (9) eine Schmelzlinse (10) ausbildet, und sich durch den Energieübertrag in der zweiten Phase in dem zweiten Bauteil (2) ein solcher Temperaturverlauf ergibt, dass auf der Oberseite des zweiten Bauteils (2) dessen Schmelztemperatur erreicht wird, sich ein Schmelzfilm ausbildet und die Wärmeeindringtiefe, definiert durch

$$d_w = \sqrt{4\kappa t_{Kontakt}} \,, \quad \kappa = \text{Temperaturleitfähigkeit}$$

in das zweite Bauteil (2) aufgrund einer Kontaktzeit ($t_{Kontakt}$), bezeichnet als die Zeit zwischen einem ersten Kontakt der Schmelzlinse (10) mit dem zweiten Bauteil (2) und der Erstarrung des in der Schmelzlinse (10) aufgeschmolzenen Materials, so eingestellt wird, dass in einer vorgegebenen Tiefe des zweiten Bauteils (2)

eine das zweite Bauteil (2) schädigende Schädigungstemperatur ($T_{\text{schädigung}}$) nicht überschritten wird, wobei die Schädigungstemperatur ($T_{\text{schädigung}}$) im zweiten Bauteil (2) definiert ist als die Temperatur T in der Tiefe ($z_{\text{krit,B2}}$) des zweiten Bauteils (2) in Richtung dessen Dicke gesehen, bei der entweder eine Schädigung des unter der metallischen Schicht (5) des zweiten Bauteils (2) liegenden Materials auftritt oder eine Ablösung der metallischen Schicht (5) auf dem zweiten Bauteil (2) von dem darunterliegenden Material erfolgt.

2.  Verfahren nach Anspruch 1, **dadurch gekennzeichnet, dass** der Energieeintrag in die Schmelzlinse (10) in der zweiten Phase derart durchgeführt wird, dass der Laserstrahl (7) durch das erste Bauteil (1) hindurch dringt, ohne zunächst in dem zweiten Bauteil eine Schmelze zu erzeugen, und die Temperatur der den Spalt (4) überbrückenden Schmelze nicht weiter erhöht wird, wobei das zweite Bauteil (2) dann durch die Wärmeenergie, die in der sich im Spalt (4) befindlichen Schmelze gespeichert ist, aufgeheizt und oberflächlich angeschmolzen wird, so dass sich die Schmelzen beider Bauteile (1, 2) verbinden, und dass dann ein Druckimpuls auf die Schmelzlinse (10) in dem ersten Bauteil (1) durch eine Materialverdampfung (16) ausgelöst wird.

3.  Verfahren nach Anspruch 1 oder 2, **dadurch gekennzeichnet, dass** der (die) in der zweiten Phase applizierte(n) Druckimpuls(e) durch unterschiedliche Modulation der Laserstrahlung (7) ausgelöst wird (werden).

4.  Verfahren nach Anspruch 3, **dadurch gekennzeichnet, dass** die durch den Laserstrahl (7) in dem ersten Bauteil (1) erzeugte Oberflächentemperatur in der zweiten Phase zeitlich moduliert wird, indem die Größe der Einstrahlfläche bei annähernd gleicher Laserleistung in Abhängigkeit der Prozessphase vergrößert und verkleinert wird.

5.  Verfahren nach einem der Ansprüche 1 bis 4, **dadurch gekennzeichnet, dass** der mindestens eine Druckimpuls durch einen dem mindestens einen Laserstrahl (7) überlagerten weiteren Laserstrahl vorgenommen wird, wobei die beiden Laserstrahlen unterschiedliche Intensitäten, Fokusdurchmesser, Pulslängen (ms-Puls, ns-Puls) und/oder Wellenlängen aufweisen.

6.  Verfahren nach Anspruch 5, **dadurch gekennzeichnet, dass** der weitere Laserstrahl oberhalb des ersten Werkstücks (1) fokussiert wird und/oder eine Wellenlänge aufweist, die eine erhöhte Absorption in einer Umgebungsatmosphäre/Plasmawolke oberhalb des ersten Bauteils (1) aufweist.

7.  Verfahren nach einem der Ansprüche 1 bis 6, **dadurch gekennzeichnet, dass** das Fügen in einer auf die gewünschte Oberflächenspannungsverteilung der Schmelzlinse (10) abgestimmten Umgebungsatmosphäre vorgenommen wird, wobei durch die ausgewählte Umgebungsatmosphäre eine Strömung der Schmelze in dem Zentrum der Schmelzlinse (10) in Richtung des zweiten Bauteils (2) erzeugt wird.

8.  Verfahren nach einem der Ansprüche 1 bis 7, **dadurch gekennzeichnet, dass** eine Messung der Temperatur oder einer zu der Temperatur korrelierenden Größe des ersten Bauteils (1) im Bereich der Schmelzlinse (10) vorgenommen wird, wobei aus einem Abfall der Temperatur oder einem Abfall der korrelierenden Größe der Zeitpunkt eines Kontakts der Schmelzlinse (10) im Spalt (4) mit dem zweiten Bauteil (2) abgeleitet wird und zu diesem Zeitpunkt eine weitere Absorption der Energie ($Q_{\text{L,a}}$) in das erste Bauteil (1) reduziert oder beendet wird.

9.  Verfahren nach einem der Ansprüche 1 bis 8, **dadurch gekennzeichnet, dass** eine Bewegung der Schmelzlinse (10) an der Oberseite des ersten Bauteils (1) im Bereich der Einstrahlfläche erfasst wird und der Umfang der absorbierten Energie ($Q_{\text{L,a}}$) in Abhängigkeit der erfassten Bewegung der Schmelzlinse (10) eingestellt wird.

10. Verfahren zum Erzeugen einer durchgehenden Fügenaht, indem Punktschweißungen, erzeugt durch das Verfahren nach einem der Ansprüche 1 bis 9, mittels Überlapp zu einer durchgehenden Fügenaht kombiniert werden, indem der Laserstrahl (7) entlang der zu erzeugenden Fügenaht schrittweise versetzt wird und an den versetzten Positionen jeweils eine Punktschweißung vorgenommen wird.

## Claims

1.  Method for joining two components (1, 2) in the region of a joint zone defining the free surfaces of the two components to be joined together by means of at least one laser beam (7) comprising the following method steps:

    positioning a first component (1) in the region of the joint zone, thermally separated at a distance from a second component (2), viewed in the direction of its thickness, forming a joint gap (4), the second component (2) having a metallic layer (5) on the side facing the first component (1),

in a first phase, directing the laser beam (7) in the direction of the thickness (11, 12) of the components (1, 2) onto the surface (8) of the first component (1) facing away from the second component (2), wherein the surface (8) irradiated by the laser beam (7) is referred to as the irradiated surface ($A_L$), and melting the first component locally, at least in accordance with the size of the joint zone, over its entire thickness (11), and then, in a second phase, applying at least one pressure pulse to the melt in the direction of the second component (2) until the melt lens (10) deflects into the joint gap (4) due to the pressure pulse, bridges the joint gap (4) and comes into contact with the second component (2), and energy is transferred to the second component (2) by the contact of the melt lens (10) with the second component (2),

**characterized in that**

the energy ($Q_{L,a}$) absorbed by the laser beam in the first component (1) being selected such that the condition

$$\text{absorbed energy} = Q_{L,a} = \int \dot{Q}_{L,a}\,dt = Q_{B1} + \int \dot{Q}_{kond1}dt + dH_{M1} + Q_{B2} + \int \dot{Q}_{kond2}dt + dH_{M2}$$

is fulfilled, where

$Q_{L,a} = \int \dot{Q}_{L,a}dt$ energy absorbed in the first component (1)

$Q_{B1} = \rho_1 \cdot A_1 \cdot s_{B1} \cdot c_{p1} \cdot (T_{m1} - T_0)$ energy required to generate a local melt lens (10) in the first component (1)

where $\rho_1$ = density of the first component (1),
$A_1$ = area of the melt lens projected in the direction of the laser beam propagation
$s_{B1}$ = thickness (11) of the first component (1),
$c_{p1}$ = thermal capacity of the first component (1),
$T_{m1}$ = melting temperature of the first component (1),
$T_0$ = ambient temperature

$\int \dot{Q}_{Kond1}dt = Q_{kond1}$ conductive heat conduction losses in the first component (1)
$dH_{M1}$ enthalpy for a material phase change in the first component (1)
$Q_{B2} = \rho_2 \cdot A \cdot s_{B2} \cdot c_{p2} \cdot (T_{m2} - T_0)$ energy required to generate a local melt film in the second component (2)

where $\rho_2$ = density of the second component (2),
$A_2$ = area of the melt lens projected in the direction of the laser beam propagation
$s_{B2}$ = thickness of the melt film in the second component (2)
$c_{p2}$ = thermal capacity of the second component (2),
$T_{m2}$ = melting temperature of the second component (2),
$T_0$ = ambient temperature

$\int \dot{Q}_{Kond2}dt = Q_{kond2}$ conductive heat conduction losses in the second component (2)
$dH_{M2}$ enthalpy for a material phase change in the second component (2)

whereby a melt lens (10) is formed from the molten material (9) in the first component (1), and such a temperature profile is generated by the energy transfer in the second phase in the second component (2) that on the upper side of the second component (2) the melting temperature thereof is reached, a melt film is formed and the heat penetration depth, defined by

$$d_w = \sqrt{4\kappa t_{Kontakt}}, \quad \kappa = \text{thermal conductivity}$$

into the second component (2) due to a contact time ($t_{contact}$), referred to as the time between a first contact of the melt lens (10) with the second component (2) and solidification of the material melted in the melt lens (10), is set such that a damage temperature ($T_{damage}$) damaging the second component (2) is not exceeded at a predetermined depth of the second component (2), wherein the damage temperature ($T_{damage}$) in the second component (2) is defined as the predetermined depth of the second component (2), wherein the damage temperature ($T_{damage}$) in the second component (2) is defined as the temperature T in the depth ($z_{crit,B2}$) of the second component (2) viewed in the direction of its thickness, at which either damage to the material lying under the metallic layer (5) of the second component (2) occurs or a detachment of the metallic layer (5) on the second component (2) from the underlying material occurs.

2. Method as in claim 1, **characterized in that** the energy input into the melt lens (10) in the second phase is carried out such that the laser beam (7) passes through the first component (1) without first generating a melt in the second component, and the temperature of the melt bridging the gap (4) is not further increased, wherein the second component (2) is then heated by the thermal energy stored in the melt located in the gap (4) and melted on the surface so that the melts of both components (1, 2) connect, and that then a pressure pulse on the melt lens (10) in the first component (1) is triggered by material evaporation (16).

3. Method as in claim 1 or 2, **characterized in that** the pressure pulse(s) applied in the second phase is/are triggered by different modulation of the laser radiation (7).

4. Method as in claim 3, **characterized in that** the surface temperature generated by the laser beam (7) in the first component (1) is temporally modulated in the second phase by increasing and decreasing the size of the irradiated surface with approximately the same laser power as a function of the process phase.

5. Method as in one of the claims 1 to 4, **characterized in that** the at least one pressure pulse is carried out by a further laser beam superimposed on the at least one laser beam (7), wherein the two laser beams have different intensities, focus diameters, pulse lengths (ms pulse, ns pulse) and/or wavelengths.

6. Method as in claim 5, **characterized in that** the further laser beam is focused above the first workpiece (1) and/or has a wavelength which has an increased absorption in an ambient atmosphere/plasma cloud above the first component (1).

7. Method as in one of the claims 1 to 6, **characterized in that** joining is carried out in an ambient atmosphere which is matched to the desired surface tension distribution of the melt lens (10), wherein a flow of the melt in the center of the melt lens (10) in the direction of the second component (2) is generated by the selected ambient atmosphere.

8. Method as in one of the claims 1 to 7, **characterized in that** a measurement of the temperature or a variable correlating to the temperature of the first component (1) is carried out in the region of the melt lens (10), wherein the time of contact of the melt lens (10) in the gap (4) with the second component (2) is derived from a drop in the temperature or a drop in the correlating variable and at this time a further absorption of the energy ($Q_{L,a}$) into the first component (1) is reduced or ended.

9. Method as in one of the claims 1 to 8, **characterized in that** a movement of the melt lens (10) on the upper side of the first component (1) is detected in the region of the irradiated surface and the extent of the absorbed energy ($Q_{L,a}$) is adjusted as a function of the detected movement of the melt lens (10).

10. Method for generating a continuous joint seam by combining spot welds produced by the method according to one of claims 1 to 9 by means of overlapping to form a continuous joint seam, by offsetting the laser beam (7) step by step along the joint seam to be produced and spot welding is carried out at each of the offset positions.

## Revendications

1. Procédé d'assemblage de deux éléments (1, 2) dans la région d'une zone d'assemblage qui définit les surfaces libres à relier des deux éléments, au moyen d'au moins un rayon laser (7) avec les étapes de procédé suivantes :

positionnement d'un premier élément (1) dans la région de la zone d'assemblage thermiquement séparé et à distance d'un second élément (2), vu dans la direction de son épaisseur, formant une fente d'assemblage (4), dans lequel le second élément (2) présente sur le côté orienté vers le premier élément (1) une couche métallique (5),
dans une première étape, le fait de diriger le rayon laser (7) dans la direction de l'épaisseur (11, 12) des éléments (1, 2) vers le premier élément (1) vers sa surface (8) opposée au second élément (2), dans lequel la surface (8) irradiée par le rayon laser (7) est désignée en tant que surface irradiée ($A_L$), et fusion du premier élément localement, au moins de façon correspondante à la taille de la zone d'assemblage, par-dessus son épaisseur (11) totale, et ensuite, dans une seconde étape, application d'au moins une impulsion de pression sur la masse fondue en direction du second élément (2) jusqu'à ce que la lentille fondue (10) dévie jusque dans la fente d'assemblage (4) du fait de l'impulsion de pression, comble la fente d'assemblage (4) et entre en contact avec le second élément (2) et qu'au contact de la lentille fondue (10) avec le second élément (2) se produise un transfert d'énergie sur le second élément (2), **caractérisé en ce que**

l'énergie absorbée ($Q_{L,a}$) via le rayon laser (7) dans le premier élément (1) est choisie de telle sorte que la condition

$$\text{énergie absorbée} = Q_{L,a} = \int \dot{Q}_{L,a} dt = Q_{B1} + \int \dot{Q}_{kond1} dt + dH_{M1} + Q_{B2} + \int \dot{Q}_{kond2} dt + dH_{M2}$$

soit satisfaite, avec

$Q_{L,a} = \int \dot{Q}_{L,a} dt$ énergie absorbée dans le premier élément (1)

$Q_{B1} = p_1 \cdot A_1 \cdot s_{B1} \cdot c_{p1} \cdot (T_{m1} - T_0)$ énergie requise pour produire une lentille fondue (10) locale dans le premier élément (1)

avec $\rho_1$ = épaisseur du premier élément (1),
$A_1$ = surface projetée de la lentille fondue en direction de la propagation du rayon laser,
$s_{B1}$ = épaisseur (11) du premier élément (1),
$c_{p1}$ = capacité thermique du premier élément (1),
$T_{m1}$ = température de fusion du premier élément (1),
$T_0$ = température ambiante

$\int \dot{Q}_{Kond1} dt = Q_{kond1}$ pertes de conduction thermique conductrice dans le premier élément (1),
$dH_{M1}$ enthalpie pour un changement de phase de matériau dans le premier élément (1),
$Q_{B2} = \rho_2 \cdot A \cdot s_{B2} \cdot c_{p2} \cdot (T_{m2} - T_0)$ énergie requise pour produire un film fondu local dans le second élément (2)

avec $\rho_2$ = épaisseur du second élément (2),
$A_2$ = surface projetée du film fondu en direction de la propagation du rayon laser,
$s_{B2}$ = épaisseur du film fondu dans le second élément (2),
$c_{p2}$ = capacité thermique du second élément (2),
$T_{m2}$ = température de fusion du second élément (2),
$T_0$ = température ambiante

$\int \dot{Q}_{Kond2} dt = Q_{kond2}$ pertes de conduction thermique conductrice dans le second élément (2),
$dH_{M2}$ enthalpie pour un changement de phase de matériau dans le second élément (2),

par lequel dans le premier élément (1) se forme une lentille fondue (10) à partir du matériau fondu (9) et via le transfert d'énergie dans la seconde étape se produit dans le second élément (2) une courbe de température telle que sur la surface du second élément (2) dont la température de fusion est atteinte se forme un film fondu et la profondeur de pénétration thermique, définie par

$$d_w = \sqrt{4\kappa t_{Kontakt}}, \quad \kappa = \text{conductibilité de température,}$$

est réglée dans le second élément (2) sur la base d'un temps de contact ($t_{Kontakt}$), défini en tant que temps entre un premier contact de la lentille fondue (10) avec le second élément (2) et la solidification du matériau fondu dans la lentille fondue (10), de telle sorte que dans une profondeur prédéfinie du second élément (2) une température de lésion ($T_{schädigung}$) source de lésion du second élément (2) ne soit pas dépassée, dans lequel la température de lésion ($T_{schädigung}$) dans le second élément (2) est définie en tant que température T dans la profondeur ($z_{krit,B2}$) du second élément (2) vu dans la direction de son épaisseur, pour laquelle soit une lésion du matériau se situant sous la couche métallique (5) du second élément (2) apparaît, soit un détachement de la couche métallique (5) sur le second élément (2) d'avec le matériau se situant en-dessous se produit.

2. Procédé selon la revendication 1, **caractérisé en ce que** l'apport d'énergie jusque dans la lentille fondue (10) est réalisé dans la seconde étape de telle sorte que le rayon laser (7) pénètre à travers le premier élément (1) sans tout d'abord produire une masse fondue dans le second élément, et la température de la masse fondue comblant la fente (4) ne continue pas à être augmentée, dans lequel le second élément (2) est alors échauffé et fondu en surface par l'énergie thermique stockée dans la masse fondue se situant dans la fente (4), de sorte que les masses fondues des deux éléments (1, 2) se relient et **en ce qu'**une impulsion de pression est libérée sur la lentille fondue (10) dans le premier élément (1) via une vaporisation de matériau (16).

3. Procédé selon la revendication 1 ou 2, **caractérisé en ce que** la (les) impulsion(s) de pression appliquée(s) dans la seconde étape est (sont) libérée(s) via des modulations différentes du rayon laser (7).

4. Procédé selon la revendication 3, **caractérisé en ce que** la température superficielle produite dans le premier élément (1) via le rayon laser (7) est modulée dans le temps dans la seconde étape du fait que la taille de la surface irradiée est agrandie ou diminuée en fonction de l'étape de processus avec une puissance laser approximativement égale.

5. Procédé selon l'une des revendications 1 à 4, **caractérisé en ce que** la au moins une impulsion de pression est effectuée via un autre rayon laser superposé au au moins un rayon laser (7), dans lequel les deux rayons laser présentent des intensités, des diamètres de foyer, des longueurs d'impulsion (impulsion ms, impulsion ns) et/ou des longueurs d'onde différents.

6. Procédé selon la revendication 5, **caractérisé en ce que** l'autre rayon laser se voit focalisé au-dessus de la première pièce à usiner (1) et/ou présente une longueur d'onde qui présente une absorption accrue dans un(e) atmosphère ambiante/nuage de plasma au-dessus du premier élément (1).

7. Procédé selon l'une des revendications 1 à 6, **caractérisé en ce que** l'assemblage est effectué dans une atmosphère ambiante concordant avec la répartition de tension superficielle souhaitée de la lentille fondue (10), dans lequel via l'atmosphère ambiante choisie un écoulement de la masse fondue est produit dans le centre de la lentille fondue (10) en direction du second élément (2).

8. Procédé selon l'une des revendications 1 à 7, **caractérisé en ce qu'**un mesurage de la température ou d'une taille corrélée à la température du premier élément (1) est effectué dans la région de la lentille fondue (10), dans lequel, à partir d'une baisse de la température ou d'une baisse de la taille corrélée, le moment d'un contact de la lentille fondue (10) dans la fente (4) avec le second élément (2) est déduit et à ce moment-là une autre absorption de l'énergie ($Q_{L,a}$) dans le premier élément (1) est réduite ou achevée.

9. Procédé selon l'une des revendications 1 à 8, **caractérisé en ce qu'**un déplacement de la lentille fondue (10) est saisi au niveau du côté supérieur du premier élément (1) dans la région de la surface irradiée et l'étendue de l'énergie absorbée ($Q_{L,a}$) est réglée en fonction du déplacement saisi de la lentille fondue (10).

10. Procédé de fabrication d'un joint d'assemblage continu, par lequel des soudures par points, produites via le procédé selon l'une des revendications 1 à 9, sont combinées au moyen d'un chevauchement pour former un joint d'assemblage continu, en ce que le rayon laser (7) se voit graduellement décalé le long du joint d'assemblage à fabriquer et un soudage par points respectif est effectué au niveau des positions décalées.

**Figur 1**

**Figur 2**

**Figur 3**

(a)　　　(b)　　　(c)

**Figur 4**

**Figur 5**

**Figur 6**

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1349696 A1

- WO 02051580 A1